# EUROPEAN PATENT APPLICATION

(11) **EP 4 207 438 A1**
(43) Date of publication of application: **05.07.2023**
(21) Application number: 21952391.7
(22) Date of filing: 06.08.2021
(51) Int. Cl.: H01M 50/10

(54) **CASE FOR BATTERY, BATTERY, POWER CONSUMING DEVICE, AND METHOD AND DEVICE FOR PREPARING BATTERY**

(71) Applicant: Contemporary Amperex Technology Co., Limited, Fujian PRC 352100 (CN)
(72) Inventor: YANG, Piaopiao, Ningde, Fujian 352100 (CN); CHEN, Xiaobo, Ningde, Fujian 352100 (CN); LI, Yao, Ningde, Fujian 352100 (CN); GU, Mingguang, Ningde, Fujian 352100 (CN); YUE, Jinru, Ningde, Fujian 352100 (CN)
(74) Representative: Rowlands, Stuart Michael
(86) International application number: PCT/CN2021/111151
(87) International publication number: WO 2023/010516

(57) **Abstract**

Provided in the embodiments of the present application are a case for a battery, a battery, a power consuming device, a method for preparing a battery, and a device for preparing a battery. The case for the battery comprises: an electrical cavity (11a), which is used for accommodating a plurality of battery cells (20), wherein at least one of the battery cells (20) comprises a pressure relief mechanism (213); a thermal management component (13), which is used for accommodating a fluid so as to adjust the temperature of the plurality of battery cells (20); and a collecting cavity (11b), which is used for collecting emissions from the battery cell (20) provided with the pressure relief mechanism (213) during actuation of the the pressure relief mechanism (213), wherein the thermal management component (13) isis used for separating the electrical cavity (11a) from the collecting cavity (11b), a support (31) is arranged in the collecting cavity (11b), and the support (31) is used for improving the compressive strength of collecting cavity (11b). By means of the technical solutions of the embodiments of the present application, the safety of the battery can be enhanced.

## Description

### Technical Field

Embodiments of the present application relate to the field of batteries, and in particular, to a case of a battery, a battery, a power consumption device, and a method and device for manufacturing a battery.

### Background Art

Energy conservation and emission reduction are the key to the sustainable development of the automobile industry. In this case, electric vehicles have become an important part of the sustainable development of the automobile industry because of their advantages of energy saving and environmental friendliness. For the electric vehicles, the battery technology is an important factor related to their development.

In the development of the battery technology, in addition to improving the performance of batteries, the safety is also a non-negligible issue. If the safety of batteries cannot be guaranteed, the batteries cannot be used. Therefore, how to enhance the safety of batteries is an urgent technical problem to be solved in the battery technology.

### Summary of the Invention

The present application provides a case of a battery, a battery, a power consumption device, and a method for manufacturing a battery, and a device for manufacturing a battery, which can enhance the safety of the battery.

In a first aspect, a case of a battery is provided, the case comprising: an electrical chamber configured to accommodate a plurality of battery cells, wherein at least one battery cell of the plurality of battery cells comprises a pressure relief mechanism, and the pressure relief mechanism is configured, when an internal pressure or temperature of the battery cell provided with the pressure relief mechanism reaches a threshold, to be actuated to relieve the internal pressure; a thermal management component configured to accommodate a fluid to adjust the temperature of the plurality of battery cells; and a collection chamber configured to collect emissions from the battery cell provided with the pressure relief mechanism when the pressure relief mechanism is actuated, wherein the thermal management component is configured to isolate the electrical chamber from the collection chamber, and a support member is provided in the collection chamber, the support member being configured to increase the compressive strength of collection chamber.

In an embodiment of the present application, the thermal management component is used to isolate the electrical chamber from the collection chamber of the case of the battery. That is, the electrical chamber for accommodating the plurality of battery cells is separated from the collection chamber for collecting the emissions. In this way, when the pressure relief mechanism of the battery cell is actuated, the emissions from the battery cells enter the collection chamber rather than the electrical chamber, or a small amount of emissions enter the electrical chamber, so that the electrical connection in the electrical chamber is not affected, and therefore the safety of the battery can be enhanced. Further, the support member is provided in the collection chamber. Since the support member provides a support function in the collection chamber, the collection chamber provided with the support member has a better compressive strength compared with the empty chamber structure. In other words, when external pressure acts on the battery, the collection chamber provided with the support member can withstand most or all of the external pressure, thereby reducing or eliminating the influence of the external pressure on the thermal management component and the battery cells and other electrical components in the electrical chamber, and increasing the compressive performance and the safety performance of the battery. In some application scenarios, the case of the battery may be mounted on a chassis of an electric vehicle, and the plurality of battery cells in the case provide power for the driving of the electric vehicle. The electric vehicle may be bumped, hit by flying stones and subjected to other adverse conditions during the driving process, which will cause impact and bottom ball punch on the chassis of the electric vehicle and even on the battery that is mounted on the chassis. Through the technical solutions of the embodiments of the present application, if the collection chamber in the case of the battery is arranged in the direction of the chassis of the electric vehicle relative to the electrical chamber, and the collection chamber provided with the support member can provide good impact and bottom ball punch resistance functions, can reduce or eliminate the impact of the bad conditions encountered by the electric vehicle on the battery during driving, and enhance the pressure resistance performance and the safety performance of the battery, thereby further improving the safety performance of the electric vehicle.

In some possible implementations, the support member forms a channel for the passage of the emissions.

In this implementation, in addition to providing a supporting function, the support member does not affect the discharge of the emissions from the battery cell, so as to ensure the safety performance of the battery cell. In addition, compared with the empty chamber structure, the channel formed by the support member can also extend the discharge path of the emissions in the collection chamber, and reduce the temperature of the emissions after they are discharged from the case, further improving the safety performance of the battery and the power consumption device where it is located.

In some possible implementations, the support member is provided with an orifice configured to form the channel in the support member.

In some possible implementations, the channel is configured for the passage of gas in the emissions and the support member is configured to block solids in the emissions.

In this implementation, the emissions from the battery cell include but are not limited to: an electrolytic solution, dissolved or split positive and negative electrode plates, fragments of a separator, high-temperature and high-pressure gas generated by reaction, sparks, etc. The emissions are all high-temperature substances, wherein the solid substances such as the high-temperature positive and negative electrode plates, the high-temperature fragments of the separator and the sparks are directly discharged to the outside of the case of the battery through a discharge valve, presenting a greater safety hazard. Through the technical solutions of the embodiments of the present application, the channel in the support can allow for the passage of high-temperature gas and/or high-temperature liquid in the emissions, and the support member is configured to block the high-temperature solids in the emissions. That is, the channel in the support member can filter the high-temperature solids from the emissions, to prevent the high-temperature solids in the emissions from being discharged out of the case of the battery to cause potential safety hazards, thereby improving the safety of the battery and the power consumption device where it is located.

In some possible implementations, the number of orifices is greater than a preset threshold, such that more than a preset number of channels are formed in the support member.

In this implementation, by providing more than a preset number of orifices in the support member, the fluidity of the emissions in the support member can be improved, and a long enough discharge path can be formed to reduce the temperature of the emissions discharged from the case of the battery, thereby improving the safety of the battery and the power consumption device where it is located. Moreover, more than a preset number of orifices can also form enough channels, which can also better filter the high-temperature solids from the emissions, further improving the safety of the battery and the power consumption device where it is located.

In some possible implementations, the orifices in the support member have a mesh number of 5 or more, to realize the filtering effect of the channels formed by the orifices on the high-temperature solids in the emissions.

In some possible implementations, a pressure relief region is provided in the thermal management component, and the emissions is discharged through the pressure relief region when the pressure relief mechanism is actuated; and the support member is arranged corresponding to a non-pressure relief region of the thermal management component to form the channel for the passage of the emissions.

In this implementation, the support member is arranged corresponding to the non-pressure relief region of the thermal management component, so as to prevent the support member from affecting the pressure relief region of the thermal management component and the pressure relief mechanism of the opposite battery cell, for example, from blocking the emissions discharged from the interior of the battery cell through the pressure relief mechanism and the pressure relief region so that the emissions cannot be collected by the collection chamber. Therefore, based on the support member provided in the embodiment of the present application, the safety performance of the battery cell is not affected while increasing the compressive strength of the collection chamber.

In some possible implementations, the support member is in contact with the non-pressure relief region of the thermal management component, so as to ensure that the support member has a good supporting effect on the thermal management component.

In some possible implementations, a pressure relief region is provided in the thermal management component, and the emissions is discharged through the pressure relief region when the pressure relief mechanism is actuated; and the support member is provided with a first orifice, the first orifice being arranged corresponding to the pressure relief region to form the channel in the support member for the passage of the emissions.

In this implementation, the first orifice in the support member is arranged corresponding to the pressure relief region of the thermal management component. While the support member realizes the support function, the first orifice provided therein also facilitates the receiving of the emissions discharged from the battery cell through the pressure relief region. The emissions can be collected into the collection chamber of the case after passing through the first orifice, so as to prevent the emissions from affecting the battery cells and other electrical means in the electrical chamber.

In some possible implementations, the first orifice is in communication with the pressure relief region of the thermal management component, so as to achieve a good conduction effect of the first orifice on the emissions from the battery cell.

In some possible implementations, the first orifice has a cross-sectional area not less than the area of the pressure relief region, so as to further improve the good conduction effect of the first orifice on the emissions.

In some possible implementations, the case further comprises: a protective member, wherein the protective member is configured to protect the thermal management component, and the protective member and the thermal management component form the collection chamber; and the support member is in contact with the thermal management component and/or the protective member.

In this implementation, the collection chamber formed by the protective member and the thermal management component does not occupy the space in the case for accommodating the battery cells. It is therefore possible to provide a collection chamber with a larger space, the emissions can be effectively collected and buffered, and the risk resulting therefrom can be reduced. In addition, the support member is in contact with the thermal management component and/or the protective member, so that the compressive strength of the thermal management component and/or the protective member can be increased, thereby preventing the external pressure from affecting the battery cells and other electrical components in the electrical chamber.

In some possible implementations, a connecting face of the support member is in contact with the thermal management component and/or the protective member, and a non-connecting face of the support member is provided with a second orifice to form a channel in the support member for the passage of the emissions, so that a discharge path through which the emissions from the battery cell passes is added, improving the safety performance of the battery.

In some possible implementations, the protective member and the support member are of an integrated structure.

In some possible implementations, the support member is of a hollow structure.

In this implementation, compared with a support member of a solid structure, the support member of the hollow structure provides support for the collection chamber and increases the compressive strength, while the weight of the support member itself is smaller, which does not add a large weight to the battery, thereby increasing the energy density of the battery. In addition, the support member of a hollow structure can also form a channel for the passage of the emissions from the battery cell, so that the emissions pass through the channel and are collected by the collection chamber. Moreover, the support member of the hollow structure does not occupy too much space in the collection chamber, and this can ensure that there is enough space in the collection chamber for accommodating and collecting the emissions from the battery cell.

In some possible implementations, the support member is of a tubular structure.

In this implementation, the axial rigidity of the support member of the tubular structure is relatively large, and the radial dimension thereof can be adapted to the height of the collection chamber, thereby providing a good support for the collection chamber.

In some possible implementations, the tubular structure has a cross-section in the shape of a hollow polygon, of which the number of sides is greater than or equal to 4, so as to improve the stability of the tubular structure in the collection chamber.

In some possible implementations, a tube wall of the tubular structure has a thickness between 0.5 mm and 3 mm, so that not only can the rigidity and the compressive strength of the support member of the tubular structure be ensured, but also the support member does not occupy a large space in the collection chamber.

In some possible implementations, the tubular structure is in the shape of a strip, a ring or a frame.

In this implementation, the strip-shaped support member is more convenient to machine, and can be flexibly mounted in a cavity of a regular or irregular shape, while the ring-shaped or frame-shaped support member may be applied to a cavity of a regular shape, providing comprehensive support for the cavity.

In some possible implementations, there are a plurality of tubular structures, which are arranged apart from each other in the collection chamber to provide uniform and comprehensive support for the collection chamber, so as to uniformly and comprehensively increase the compressive strength of the collection chamber.

In some possible implementations, the plurality of tubular structures are symmetrically arranged in the collection chamber, which can improve the stability of the collection chamber, thereby improving the stability of mounting of the case of the battery in its apparatus.

In some possible implementations, there are a plurality of tubular structures, which are stacked and connected to each other, wherein the plurality of tubular structures have a honeycomb-shaped cross-section.

In this implementation, the collection chamber is provided with a honeycomb-shaped tubular support member having a single-point yield, a large axial rigidity and a high compressive strength, so that the compressive strength of the collection chamber can be increased, thereby improving the safety performance of the battery and the power consumption device where it is located.

In some possible implementations, connecting faces of two of the tubular structures connected to each other are provided with orifices corresponding to each other for forming a channel in the two tubular structures for the passage of the emissions.

In some possible implementations, a surface of the support member is provided with a temperature reducing material.

In some possible implementations, the support member is of a hollow structure in which a temperature reducing material is provided.

In this implementation, the support member may be provided with a temperature reducing material to further reduce the temperature of the emissions passing through the support member, thereby improving the safety performance of the battery and the power consumption device where it is located.

In some possible implementations, the temperature reducing material is a phase change material (PCM).

In some possible implementations, the support member is of a metal material.

In this implementation, the support member of the metal material has a good ductility and a high strength, can buffer and resist external pressure, and has a high compressive strength.

In a second aspect, a battery is provided, comprising: a plurality of battery cells, at least one battery cell of the plurality of battery cells comprising a pressure relief mechanism, and the pressure relief mechanism being configured, when an internal pressure or temperature of the battery cell provided with the pressure relief mechanism reaches a threshold, to be actuated to release the internal pressure; and a case in the first aspect or in any possible implementation of the first aspect, the case being configured to accommodate the plurality of battery cells.

In a third aspect, a power consumption device is provided, comprising: a battery provided according to the second aspect, the battery being configured to supply electric energy.

In some possible implementations, the power consumption device is a vehicle, a ship or a spacecraft.

In a fourth aspect, a method for manufacturing a battery is provided, the method comprising: providing a plurality of battery cells, at least one battery cell of the plurality of battery cells comprising a pressure relief mechanism, and the pressure relief mechanism being configured, when an internal pressure or temperature of the battery cell provided with the pressure relief mechanism reaches a threshold, to be actuated to release the internal pressure; providing a case, the case comprising: an electrical chamber configured to accommodate the plurality of battery cells; a thermal management component configured to accommodate a fluid to adjust the temperature of the plurality of battery cells; and a collection chamber configured to collect emissions from the battery cell provided with the pressure relief mechanism when the pressure relief mechanism is actuated, wherein the thermal management component is configured to isolate the electrical chamber from the collection chamber, and a support member is provided in the collection chamber, the support member being configured to increase the compressive strength of collection chamber; causing the plurality of battery cells to be accommodated in the electrical chamber.

In a fifth aspect, a device for manufacturing a battery is provided, the device comprising: a first provision module configured to provide a plurality of battery cells, at least one battery cell of the plurality of battery cells comprising a pressure relief mechanism, and the pressure relief mechanism being configured, when an internal pressure or temperature of the battery cell provided with the pressure relief mechanism reaches a threshold, to be actuated to relieve the internal pressure; a second provision module configured to provide a case, the case comprising: an electrical chamber configured to accommodate the plurality of battery cells; a thermal management component configured to accommodate a fluid to adjust the temperature of the plurality of battery cells; and a collection chamber configured to collect emissions from the battery cell provided with the pressure relief mechanism when the pressure relief mechanism is actuated, wherein the thermal management component is configured to isolate the electrical chamber from the collection chamber, and a support member is provided in the collection chamber, the support member being configured to increase the compressive strength of collection chamber; a mounting module is configured to cause the plurality of battery cells to be accommodated in the electrical chamber.

In an embodiment of the present application, the thermal management component is used to isolate the electrical chamber from the collection chamber of the case of the battery. That is, the electrical chamber for accommodating the plurality of battery cells is separated from the collection chamber for collecting the emissions. In this way, when the pressure relief mechanism of the battery cell is actuated, the emissions from the battery cells enter the collection chamber rather than the electrical chamber, or a small amount of emissions enter the electrical chamber, so that the electrical connection in the electrical chamber is not affected, and therefore the safety of the battery can be enhanced. Further, the support member is provided in the collection chamber. Since the support member provides a support function in the collection chamber, the collection chamber provided with the support member has a better compressive strength compared with the empty chamber structure. In other words, when external pressure acts on the battery, the collection chamber provided with the support member can withstand most or all of the external pressure, thereby reducing or eliminating the influence of the external pressure on the thermal management component and the battery cells and other electrical components in the electrical chamber, and increasing the compressive performance and the safety performance of the battery.

### Brief Description of the Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without creative efforts.
Fig. 1 is a schematic structural diagram of a vehicle disclosed in an embodiment of the present application;
Fig. 2 is a schematic structural diagram of a battery disclosed in an embodiment of the present application;
Fig. 3 is a schematic structural diagram of a battery cell disclosed in an embodiment of the present application;
Fig. 4 is a schematic structural diagram of a case of a battery disclosed in an embodiment of the present application;
Fig. 5 is a schematic perspective view of several support members disclosed in an embodiment of the present application;
Fig. 6 is a schematic perspective view of several support members disclosed in an embodiment of the present application;
Fig. 7 is a schematic structural diagram of a case of a battery disclosed in an embodiment of the present application;
Fig. 8 is a schematic exploded view of region A in the case of the battery of the embodiment shown in Fig. 7;
Fig. 9 is a schematic exploded view of a part of the structure of a case of a battery disclosed in an embodiment of the present application;
Fig. 10 is a schematic exploded view of a part of the structure of a case of a battery disclosed in an embodiment of the present application;
Fig. 11 is a schematic structural diagram of a case of a battery disclosed in an embodiment of the present application;
Fig. 12 is a schematic top view of the case of the battery in the embodiment shown in Fig. 11;
Fig. 13 is a schematic enlarged view of part B in the case of the battery of the embodiment shown in Fig. 11;
Fig. 14 is a schematic exploded view of a case of a battery disclosed in an embodiment of the present application;
Fig. 15 is a schematic structural diagram of a case of a battery disclosed in an embodiment of the present application;
Fig. 16 is a schematic top view of the case of the battery in the embodiment shown in Fig. 15;
Fig. 17 is a schematic enlarged view of part C in the case of the battery of the embodiment shown in Fig. 15;
Fig. 18 is a schematic perspective view of several support members disclosed in an embodiment of the present application;
Fig. 19 is a schematic exploded view of a case of a battery disclosed in an embodiment of the present application;
Fig. 20 is a schematic structural diagram of a case of a battery disclosed in an embodiment of the present application;
Fig. 21 is a schematic top view of the case of the battery in the embodiment shown in Fig. 20;
Fig. 22 is a schematic enlarged view of part D in the case of the battery of the embodiment shown in Fig. 20;
Fig. 23 is a schematic perspective view and a partially enlarged view of a support member disclosed in an embodiment of the present application;
Fig. 24 is a schematic structural diagram of a case of a battery disclosed in an embodiment of the present application;
Fig. 25 is a schematic enlarged view of part E in the case of the battery of the embodiment shown in Fig. 24;
Fig. 26 is a schematic exploded view of a case of a battery disclosed in an embodiment of the present application;
Fig. 27 is a schematic flowchart of a method for manufacturing a battery according to an embodiment of the present application; and
Fig. 28 is a schematic block diagram of an apparatus for manufacturing a battery according to an embodiment of the present application.

In the accompanying drawings, the figures are not drawn to scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example, but shall not be used to limit the scope of the present application. That is, the present application is not limited to the described embodiments.

In the description of the present application, it should be noted that "a plurality of" means at least two, unless otherwise specified. the orientation or a position relationship indicated by the terms "upper", "lower", "left", "right", "inner", "outer", etc. is for convenience of describing the present application and simplifying the description only, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and shall not be construed as indicating or implying relative importance. The term "perpendicular" does not mean being perpendicular in the strict sense, but within an allowable range of errors. The term "parallel" does not mean being parallel in the strict sense, but within an allowable range of errors.

The orientation terms in the following description all indicate directions shown in the drawings, but do not limit the specific structure in the present application. In the description of the present application, it should also be noted that, the term "mount", "engage", and "connect" should be interpreted in the broad sense unless explicitly defined and limited otherwise, which, for example, may mean a fixed connection, a detachable connection or an integral connection; or may mean a direct connection, or an indirect connection by means of an intermediary. For those of ordinary skill in the art, the specific meaning of the terms mentioned above in the present application can be construed according to specific circumstances.

The term "and/or" in the present application is merely a description of the associated relationship of associated objects, representing that three relationships may exist, for example, A and/or B, may be expressed as: the three instances of A alone, A and B simultaneously, and B alone. In addition, the character "/" in the present application generally indicates that the associated objects before and after the character are in a relationship of "or".

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the drawings described above are intended to cover non-exclusive inclusion. The terms "first", "second", etc. in the description and the claims of the present application as well as the foregoing drawings are used to distinguish between different objects, rather than describing a specific order or a primary-secondary relationship.

In the present application, "embodiment" mentioned means that the specific features, structures and characteristics described with reference to the embodiments may be included in at least one embodiment of the present application. The phrase at various locations in the specification does not necessarily refer to the same embodiment, or an independent or alternative embodiment exclusive of another embodiment. Those skilled in the art should understand, in explicit and implicit manners, that an embodiment described in the present application may be combined with another embodiment.

In the present application, a battery cell may include a lithium ion secondary battery, a lithium ion primary battery, a lithium-sulfur battery, a sodium/lithium ion battery, a sodium ion battery or a magnesium ion battery, and the like, which is not limited in the embodiments of the present application. The battery cell may be cylindrical, flat, cuboid or in another shape, which is not limited in the embodiments of the present application. The battery cells are generally classified into three types depending on the way of package: cylindrical battery cells, prismatic battery cells and pouch battery cells, which are also not limited in the embodiments of the present application.

A battery mentioned in the embodiments of the present application refers to a single physical module comprising one or more battery cells to provide a higher voltage and capacity. For example, the battery mentioned in the present application may comprise a battery module, a battery pack, or the like. The battery generally comprises a case for packaging one or more battery cells. The case can prevent liquid or other foreign matters from affecting the charging or discharging of the battery cell.

The battery cell comprises an electrode assembly and an electrolytic solution, the electrode assembly being composed of a positive electrode plate, a negative electrode plate and a separator. The battery cell operates mainly by means of metal ions moving between the positive electrode plate and the negative electrode plate. The positive electrode plate comprises a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive electrode tab. A lithium ion battery is taken as an example, the positive electrode current collector may be made of aluminum, and the positive electrode active material may be lithium cobalt oxide, lithium iron phosphate, ternary lithium, lithium manganate, or the like. The negative electrode plate comprises a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative electrode tab. The negative electrode current collector may be made of copper, and the negative electrode active material may be carbon, silicon, or the like. In order to ensure that no fusing occurs when a large current passes, a plurality of positive electrode tabs are provided and are stacked together, and a plurality of negative electrode tabs are provided and are stacked together. The separator may be made from polypropylene (PP), Polyethylene (PE), or the like. In addition, the electrode assembly may be of a winding structure or a laminated structure, which is not limited in the embodiments of the present application.

Design factors on many aspects need to be simultaneously considered for the development of the battery technology, such as energy density, cycle life, discharge capacity, charge-discharge rate, and other performance parameters. In addition, the safety of the battery needs to be taken into account.

With respect to battery cells, the main safety hazards come from the charging and discharging processes, and a suitable environmental temperature design is also required. In order to effectively avoid unnecessary losses, at least triple protection measures are generally taken for the battery cells. Specifically, the protection measures comprise at least a switching element, a properly selected separator material and a pressure relief mechanism. The switching element refers to an element that can stop the charging or discharging of a battery when the temperature or resistance in a battery cell reaches a certain threshold. The separator is configured to isolate the positive electrode plate from the negative electrode plate and can automatically dissolve micron-sized (or even nanoscale) micropores attached to the separator when the temperature rises to a certain value, thus preventing metal ions from passing through the separator and terminating the internal reaction of the battery cell.

The pressure relief mechanism refers to an element or component that is actuated to relieve the internal pressure or temperature when the internal pressure or temperature of the battery cell reaches a predetermined threshold. The threshold design varies according to different design requirements. The threshold may depend on the material of one or more of the positive electrode plate, the negative electrode plate, the electrolytic solution and the separator in the battery cell. The pressure relief mechanism may take the form of an anti-explosion valve, an air valve, a pressure relief valve or a safety valve, etc., and may specifically adopt a pressure-sensitive or temperature-sensitive element or structure. That is, when the internal pressure or temperature of the battery cell reaches a predetermined threshold, the pressure relief mechanism operates or a weakened structure provided in the pressure relief mechanism is damaged, so as to form an opening or channel for relieving the internal pressure or temperature.

The "actuation" mentioned in the present application means that the pressure relief mechanism acts or is activated to a certain state, such that the internal pressure and temperature of the battery cell can be relieved. The action executed by the pressure relief mechanism may include but is not limited to: at least a portion of the pressure relief mechanism being fractured, broken, torn or opened, etc. When the pressure relief mechanism is actuated, high-temperature and high-pressure substances inside the battery cell are discharged outwardly from the actuated position as emissions. In this way, the pressure and temperature of the battery cell can be relieved at a controllable pressure or temperature, thereby avoiding potential, more serious accidents.

The emissions from the battery cell mentioned in the present application include but are not limited to: the electrolytic solution, the dissolved or split positive and negative electrode plates, fragments of the separator, high-temperature and high-pressure gas generated by reaction, sparks, etc.

The pressure relief mechanism on the battery cell has an important impact on the safety of the battery. For example, when short circuit, overcharge or other phenomena occur, it may lead to thermal runaway inside the battery cell, resulting in a sudden increase in pressure or temperature. In this case, the internal pressure and heat can be released outwardly through the actuation of the pressure relief mechanism, to prevent the battery cell from exploding or catching fire.

In the current design solutions of the pressure relief mechanism, the main concern is to release the high pressure and high heat from the battery cell, i.e., to discharge the emissions to the outside of the battery cell. However, in order to ensure an output voltage or current of the battery, a plurality of battery cells are often required and are electrically connected to each other via a bus component. The emissions discharged from the interior of a battery cell may cause short circuit of the other battery cells. For example, when two bus components are electrically connected to each other via discharged metal scraps, the battery is short-circuited, thereby posing potential safety hazards. Moreover, the high-temperature and high-pressure emissions are discharged in a direction of the pressure relief mechanism provided in the battery cell, and more specifically, may be discharged in a direction of a region where the pressure relief mechanism is actuated. The strength and destructive power of such emissions may be great, or may even be enough to break through one or more structures in this direction, causing further safety problems.

In view of this, the present application provides a technical solution in which the interior of a case of a battery is separated by a thermal management component into an electrical chamber for accommodating battery cells and a collection chamber for collecting emissions. When a pressure relief mechanism is actuated, the emissions from the battery cells enter the collection chamber, but do not enter the electrical chamber or only a small amount of emissions enter the electrical chamber, thereby reducing the impact of the emissions on a bus component in the electrical chamber, so that the safety of the battery can be enhanced. In addition, since the emissions from the battery cells are collected with the collection chamber, the high-temperature and high-pressure emissions are buffered, and the pressure and temperature of the emissions are reduced. This reduces the destructive power of the emissions to other structures, thereby further enhancing the safety of the battery.

The thermal management component is configured to accommodate a fluid to adjust the temperature of a plurality of battery cells. The fluid here may be liquid or gas, and temperature adjustment means heating or cooling the plurality of battery cells. In the case of cooling or reducing the temperature of the battery cells, the thermal management component is configured to accommodate a cooling fluid to reduce the temperature of the plurality of battery cells. In this case, the thermal management component may also be called a cooling component, a cooling system or a cooling plate, etc. The fluid accommodated by the thermal management component may also be called a cooling medium or a cooling fluid, and more specifically, may be called a cooling liquid or a cooling gas. In addition, the thermal management component may also be used for heating the plurality of battery cells to raise the temperature thereof, which will not be limited in the embodiments of the present application. Optionally, the fluid may flow in a circulating manner to achieve better temperature adjustment effects. Optionally, the fluid may be water, a mixture of water and ethylene glycol, or air, etc.

The electrical chamber is configured to accommodate the plurality of battery cells and the bus component. The electrical chamber may be sealed or unsealed. The electrical chamber provides a space for mounting the battery cells and the bus component. In some embodiments, a structure configured to fix the battery cells may be further provided in the electrical chamber. The electrical chamber may be shaped according to the plurality of battery cells and the bus component which are accommodated therein. In some embodiments, the electrical chamber may be a cube with six walls. Since the battery cells in the electrical chamber form higher voltage output through electrical connection, the electrical chamber may also be called a "high-voltage chamber".

The bus component is configured for achieving an electrical connection between the plurality of battery cells, such as parallel connection, series connection, or series-parallel connection. The bus component may achieve the electrical connection between the battery cells by connecting electrode terminals of the battery cells. In some embodiments, the bus component may be fixed to the electrode terminals of the battery cells by means of welding. Corresponding to the "high-voltage chamber", the electrical connection formed by the bus component may also be called "high-voltage connection".

The collection chamber is configured to collect the emissions and may be sealed or unsealed. In some embodiments, the collection chamber may contain air or another gas. In the collection chamber there is no electrical connection to the voltage output. Corresponding to the "high-voltage chamber", the collection chamber may also be called a "low-voltage chamber". Optionally, or additionally, the collection chamber may also contain liquid, such as a cooling medium, or a component for accommodating the liquid is provided to further cool the emissions entering the collection chamber. Further, optionally, the gas or the liquid in the collection chamber flows in a circulating manner.

During use, the battery may be affected by the external environment. For example, the external pressure acts on the case of the battery, affecting the case of the battery and even the battery cells in the case, thereby affecting the safety performance of the battery. As an example, in some application scenarios, the battery may be mounted on a chassis of an electric vehicle and provide power for the driving of the electric vehicle. The electric vehicle may be bumped, hit by flying stones and subjected to other adverse conditions during the driving process, which will cause impact and bottom ball punch on the chassis of the electric vehicle and even on the battery that is mounted on the chassis, thereby adversely affecting the battery.

In view of this, on the basis of the embodiments of the present application as described above, an embodiment of the present application further provides a support member in the collection chamber of the case of the battery to increase the compressive strength of the collection chamber. When external pressure acts on the battery, the collection chamber provided with the support member can withstand most or all of the external pressure, thereby reducing or eliminating the influence of the external pressure on the thermal management component and the battery cells and other electrical components in the electrical chamber, and improving the compressive performance and the safety performance of the battery. For the above application scenario where the battery is mounted on the chassis of the electric vehicle, the collection chamber in the case of the battery can be arranged in the direction of the chassis of the electric vehicle relative to the electrical chamber, and the collection chamber provided with the support member can provide good impact and bottom ball punch resistance functions, can reduce or eliminate the impact of the bad conditions encountered by the electric vehicle on the battery during driving, and enhance the pressure resistance performance and the safety performance of the battery, thereby further improving the safety performance of the electric vehicle.

The technical solutions described in the embodiments of the present application are all applicable to various devices using a battery, such as mobile phones, portable apparatuses, laptops, battery cars, electric toys, electric tools, electric vehicles, ships and spacecraft. For example, the spacecrafts include airplanes, rockets, space shuttles, space vehicles, etc.

It should be understood that the technical solutions described in the embodiments of the present application are not only applicable to the apparatuses described above, but also applicable to all apparatuses using a battery. However, for the sake of brevity of description, the following embodiments will be described taking an electric vehicle as an example.

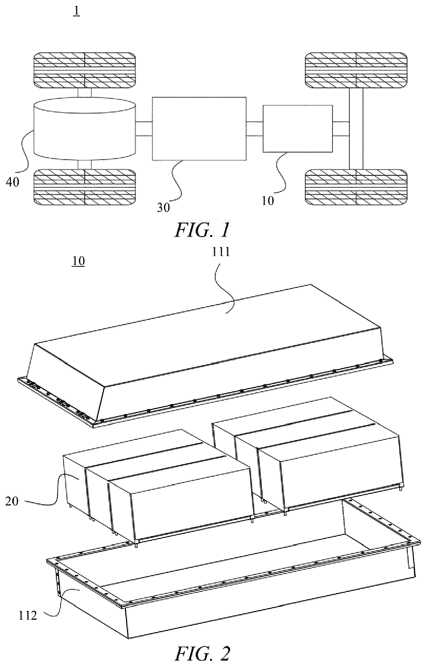

For example, Fig. 1 shows a schematic structural diagram of a vehicle 1 according to an embodiment of the present application. The vehicle 1 may be a fuel vehicle, a gas vehicle or a new-energy vehicle. The new-energy vehicle may be a battery electric vehicle, a hybrid vehicle, an extended-range vehicle, etc. A motor 40, a controller 30 and a battery 10 may be provided inside the vehicle 1, and the controller 30 is configured to control the battery 10 to supply power to the motor 40. For example, the battery 10 may be provided at the bottom or the head or the tail of the vehicle 1. The battery 10 may be configured to supply power to the vehicle 1. For example, the battery 10 can serve as an operating power source of the vehicle 1 for use in a circuit system of the vehicle 1, for example, to meet the working power demand of the vehicle 1 during startup, navigation and running. In another embodiment of the present application, the battery 10 can not only serve as an operating power source for the vehicle 1, but also serve as a driving power source for the vehicle 1, instead of or partially instead of fuel or natural gas, to provide driving power for the vehicle 1.

The battery may comprise a plurality of battery cells in order to meet different power demands, wherein the plurality of battery cells may be in series connection, parallel connection or series-parallel connection. The series-parallel connection refers to a combination of series connection and parallel connection. The battery may also be called a battery pack. Optionally, the plurality of battery cells may be connected in series or parallel or series-parallel to form a battery module, and a plurality of battery modules may then be connected in series or parallel or series-parallel to form the battery. That is to say, the plurality of battery cells may directly constitute the battery, or may first constitute the battery modules that may then constitute the battery.

For example, as shown in Fig. 2, which is a schematic structural diagram of a battery 10 according to an embodiment of the present application. The battery 10 may comprise a plurality of battery cells 20. The battery 10 may further comprise a case (or an enclosure) with the interior of the case being of a hollow structure, and the plurality of battery cells 1020 are accommodated in the case. As shown in Fig. 2, the case may comprise two portions, which are referred to herein as a first portion 111 and a second portion 112. The first portion 111 and the second portion 112 are fastened together. The first portion 111 and the second portion 112 may be shaped depending on the shape of a combination of the plurality of battery cells 20, and each of the first portion 111 and the second portion 112 may have an opening. For example, the first portion 111 and the second portion 112 each may be a hollow cuboid and each have only one surface with an opening, and the opening of the first portion 111 is arranged opposite to the opening of the second portion 112. The first portion 111 and the second portion 112 are fastened to each other to form a case with a closed chamber. The plurality of battery cells 20 are combined in parallel connection or in series connection or in series-parallel connection and are then placed in the case formed by fastening the first portion 111 to the second portion 112.

Optionally, the battery 10 may further comprise other structures, which will not be described in detail herein. For example, the battery 10 may further comprise a bus component. The bus component is configured to implement the electric connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. The electric energy of the plurality of battery cells 20 may be further led out by means of an electrically conductive mechanism passing through the case. Optionally, the electrically conductive mechanism may also be a bus component.

The number of battery cells 20 may be set to any value according to different power demands. The plurality of battery cells 20 may be in series connection, in parallel connection or in series-parallel connection to achieve higher capacity or power. Since each battery 10 may comprise a large number of battery cells 20. For ease of mounting, the battery cells 20 may be provided in groups, and each group of battery cells 20 constitutes a battery module. The number of battery cells 20 included in the battery module is not limited and may be set as required.

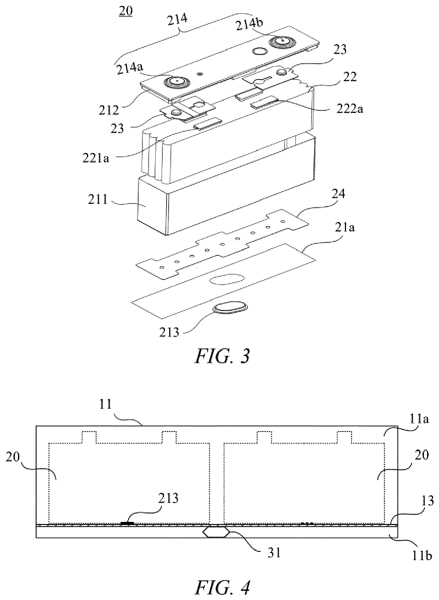

Fig. 3 is a schematic structural diagram of a battery cell 20 according to an embodiment of the present application. The battery cell 20 comprises one or more electrode assemblies 22, a housing 211 and a cover plate 212. A wall of the housing 211 and the cover plate 212 are each referred to as a wall of the battery cell 20. The housing 211 may be determined according to the shape of a combination of the one or more electrode assemblies 22. For example, the housing 211 may be a hollow cuboid, cube or cylinder, and one of faces of the housing 211 has an opening such that the one or more electrode assemblies 22 can be placed in the housing 211. For example, when the housing 211 is a hollow cuboid or cube, one flat face of the housing 211 is an opening face, i.e., the flat face has no wall, so that the inside and outside of the housing 211 are in communication with each other. When the housing 211 is a hollow cylinder, an end face of the housing 211 is an opening face, i.e., the end face has no wall, so that the inside and outside of the housing 211 are in communication with each other. The cover plate 212 covers the opening and is connected to the housing 211 to form a closed cavity in which the electrode assembly 22 is placed. The housing 211 is filled with an electrolyte, such as an electrolytic solution.

The battery cell 20 may further comprise two electrode terminals 214, and the two electrode terminals 214 may be arranged on the cover plate 212. The cover plate 212 is generally in the form of a flat plate, the two electrode terminals 214 are fixed to a flat plate face of the cover plate 212, and the two electrode terminals 214 are respectively a positive electrode terminal 214a and a negative electrode terminal 214b. Each electrode terminal 214 is correspondingly provided with a connecting member 23 also called a current collecting member 23, which is located between the cover plate 212 and the electrode assembly 22 and configured to electrically connect the electrode assembly 22 to the electrode terminal 214.

As shown in Fig. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tab 221a of one or more electrode assemblies 22 is connected to one electrode terminal via one connecting member 23, and the second tab 212a222a of the one or more electrode assemblies 22 is connected to the other electrode terminal via the other connecting member 23. For example, the positive electrode terminal 214a is connected to the positive electrode tab via one connecting member 23, and the negative electrode terminal 214b is connected to the negative electrode tab via the other connecting member 23.

In the battery cell 20, according to practical use demands, one or more electrode assemblies 22 may be provided. As shown in Fig. 3, four independent electrode assemblies 22 are provided in the battery cell 20.

As an example, one of the walls of the battery cell 20, such as a first wall 21a shown in Fig. 3, may be further provided with a pressure relief mechanism 213. For convenience of display, the first wall 21a is separated from the housing 211 in Fig. 3, but this does not specify that a bottom side of the housing 211 has an opening. The pressure relief mechanism 213 is configured, when an internal pressure or temperature of the battery cell 20 reaches a threshold, to be actuated to relieve the internal pressure or temperature.

The pressure relief mechanism 213 may be a portion of the first wall 21a or is split from the first wall 21a and fixed to the first wall 21a by means of welding, for example. When the pressure relief mechanism 213 is a portion of the first wall 21a, the pressure relief mechanism 213 may, for example, be formed by providing an indentation on the first wall 21a, and the thickness of the first wall 21a corresponding to the indentation is less than that of other regions of the pressure relief mechanism 213 except the indentation. The indentation is the weakest position of the pressure relief mechanism 213. When excessive gas generated by the battery cell 20 causes the internal pressure of the housing 211 to rise and reach a threshold, or the internal temperature of the battery cell 20 rises and reaches a threshold due to the heat generated by the internal reaction of the battery cell 20, the pressure relief mechanism 213 can be fractured at the indentation, resulting in the communication between the inside and outside of the housing 211. The gas pressure and heat are released outwardly through the cracking of the pressure relief mechanism 213, thereby preventing the battery cell 20 from exploding.

Optionally, in an embodiment of the present application, as shown in Fig. 3, in the case where the pressure relief mechanism 213 is provided at the first wall 21a of the battery cell 20, a second wall of the battery cell 20, which is different from the first wall 21a, is provided with electrode terminals 214.

Optionally, the second wall is arranged opposite to the first wall 21a. For example, the first wall 21a may be a bottom wall of the battery cell 20, and the second wall may be a top wall of the battery cell 20, i.e., the cover plate 212.

Optionally, as shown in Fig. 3, the battery cell 20 may further comprise a backing plate 24. The backing plate 24 is located between the electrode assembly 22 and the bottom wall of the housing 211, can support the electrode assembly 22, and can also effectively prevent the electrode assembly 22 from interfering with rounded corners around the bottom wall of the housing 211. In addition, the backing plate 24 may be provided with one or more through holes. For example, the backing plate may be provided with a plurality of uniformly arranged through holes. Alternatively, it is also possible that when the pressure relief mechanism 213 is provided on the bottom wall of the housing 211, a through hole is formed at a position corresponding to the pressure relief mechanism 213 for facilitating the guiding of liquid and gas. Specifically, spaces at an upper surface and a lower surface of the backing plate 24 can be in communication with each other in this way, and gas generated inside the battery cell 20 and the electrolytic solution can both freely pass through the backing plate 24.

The pressure relief mechanism 213 and the electrode terminals 214 are provided on different walls of the battery cell 20, such that when the pressure relief mechanism 213 is actuated, the emissions from the battery cell 20 can be farther away from the electrode terminals 214, thereby reducing the impact of the emissions on the electrode terminals 214 and the bus component, so that the safety of the battery can be enhanced.

Further, when the electrode terminals 214 are provided on the cover plate 212 of the battery cell 20, the pressure relief mechanism 213 is provided on the bottom wall of the battery cell 20, such that when the pressure relief mechanism 213 is actuated, the emissions from the battery cell 20 can be discharged to the bottom of the battery 10. In this way, the risk resulting from the emissions can be reduced by using the thermal management component at the bottom of the battery 10, and the harm to a user can be reduced because the bottom of the battery 10 is usually far away from the user.

The pressure relief mechanism 213 may be of a variety of possible pressure relief structures, will not be limited in the embodiments of the present application. For example, the pressure relief mechanism 213 may be a temperature-sensitive pressure relief mechanism configured to be capable of being melted when the internal temperature of the battery cell 20 provided with the pressure relief mechanism 213 reaches a threshold; and/or the pressure relief mechanism 213 may be a pressure-sensitive pressure relief mechanism configured to be capable of being fractured when an internal gas pressure of the battery cell 20 provided with the pressure relief mechanism 213 reaches a threshold.

Fig. 4 is a schematic structural diagram of a case 11 of a battery according to an embodiment of the present application. As shown in Fig. 4, the case 11 comprises: an electrical chamber 11a configured to accommodate a plurality of battery cells 20, wherein at least one battery cell 20 of the plurality of battery cells 20 may comprise a pressure relief mechanism 213, and the pressure relief mechanism 213 is configured, when an internal pressure or temperature of the battery cell 20 provided with the pressure relief mechanism 213 reaches a threshold, to be actuated to relieve the internal pressure or temperature;
a thermal management component 13 configured to accommodate a fluid to adjust the temperature of the plurality of battery cells 20; and
a collection chamber 11b configured to collect emissions from the battery cell 20 provided with the pressure relief mechanism 213 when the pressure relief mechanism 213 is actuated.

The thermal management component 13 is configured to isolate the electrical chamber 11a from the collection chamber 11b. A support member 31 is provided in the collection chamber 11b. The support member 31 is configured to increase the compressive strength of collection chamber 11b.

In the embodiment of the present application, the thermal management component 13 is used to isolate the electrical chamber 11a from the collection chamber 11b. That is, the electrical chamber 11a for accommodating the plurality of battery cells 20 is separated from the collection chamber 11b for collecting the emissions. In this way, when the pressure relief mechanism 213 is actuated, the emissions from the battery cells 20 enter the collection chamber 1 1b rather than the electrical chamber, or a small amount of emissions enter the electrical chamber 11a, so that the electrical connection in the electrical chamber 1 1a is not affected, and therefore the safety of the battery can be enhanced.

Further, a support member 31 is further provided in the collection chamber 11b. Since the support member 31 provides a support function in the collection chamber 11b, the collection chamber 11b provided with the support member 31 has a better compressive strength compared with the empty chamber structure. In other words, when external pressure acts on the battery, the collection chamber 11b provided with the support member 31 can withstand most or all of the external pressure, thereby reducing or eliminating the influence of the external pressure on the thermal management component 13 and the battery cells 20 and other electrical components in the electrical chamber 11a, and increasing the compressive performance and the safety performance of the battery.

In some application scenarios, the battery may be mounted on a chassis of an electric vehicle, and provides power for the driving of the electric vehicle. Specifically, the collection chamber 11b of the battery faces the chassis of the electric vehicle relative to the electrical chamber 11a. The electric vehicle may be bumped, hit by flying stones and subjected to other adverse conditions during the driving process, which will cause impact and bottom ball punch on the chassis of the electric vehicle and even on the battery that is mounted on the chassis. Through the technical solutions of the embodiments of the present application, the support member 31 in the collection chamber 1 1b can provide good impact and bottom ball punch resistance functions, can reduce or eliminate the impact of the bad conditions encountered by the electric vehicle on the battery during driving, and enhance the pressure resistance performance and the safety performance of the battery, thereby further improving the safety performance of the electric vehicle.

It can be understood that Fig. 4 is only an example, showing a schematic cross-sectional view of a support member 31 provided in the collection chamber 11b, which should not limit the scope of protection of the present application. In addition to the embodiment shown in Fig. 4, the support member 31 provided in the embodiments of the present application may also be in other forms, and/or be arranged at other positions in the collection chamber 11b, so as to provide support for the collection chamber 11b and strengthen the compressive strength of the collection chamber 11b. The embodiments of the present application do not specifically limit the shape and position of the support member 31.

Optionally, in an embodiment of the present application, the thermal management component 13 has a wall shared by the electrical chamber 11a and the collection chamber 11b. As shown in Fig. 4, the thermal management component 13 may be both a wall of the electrical chamber 11a and a wall of the collection chamber 11b. That is, the thermal management component 13 (or a portion thereof) may be directly used as a wall shared by the electrical chamber 11a and the collection chamber 11b. In this way, the emissions from the battery cell 20 can enter the collection chamber 11b through the thermal management component 13. Moreover, due to the existence of the thermal management component 13, the emissions can be isolated from the electrical chamber 11a as far as possible, thereby reducing the risk resulting from the emissions and enhancing the safety performance of the battery.

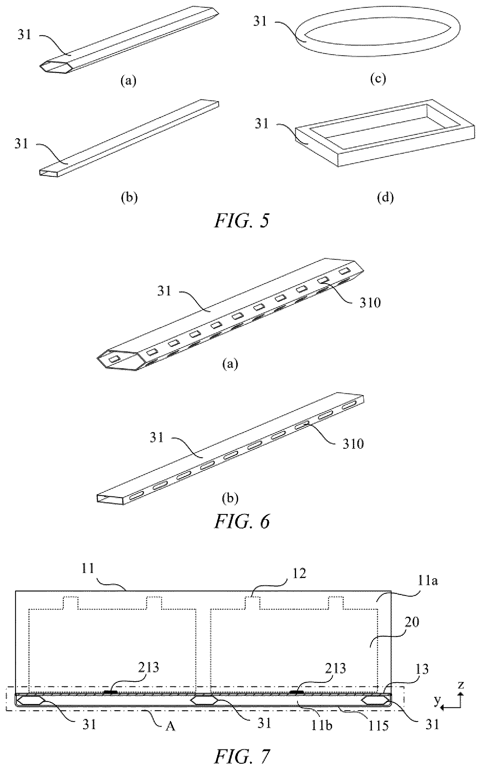

In order to provide a good support performance, Fig. 5 shows a schematic perspective view of several support members 31 provided in the present application.

As shown in (a) and (b) of Fig. 5, the two support members 31 are of a strip-shaped structure. The strip-shaped structure is more convenient to machine and can be flexibly mounted in a cavity of a regular or irregular shape. For example, if the collection chamber 11b is a cuboid, the support member 31 of the strip-shaped structure is convenient to be mounted in the collection chamber 11b parallel to the long side or the short side of the collection chamber 11b.

As shown in Fig. 5 (c), the support member 31 is of a ring-shaped structure. As shown in Fig. 5 (d), the support member 31 is of a frame-shaped structure. The ring-shaped support member 31 or the frame-shaped support member 31 may be applied to a cavity of a regular shape, providing comprehensive support for the cavity. For example, if the collection chamber 11b is a cuboid, the support member 31 of the ring-shaped or frame-shaped structure may be correspondingly arranged in the center of the collection chamber 11b.

Optionally, the support member 31 in the above embodiments of the present application not only provides a supporting function, but also forms a channel for the passage of the emissions from the battery cell 20. Specifically, a channel for the passage of the emissions may be formed between the support member 31 and a chamber wall of the collection chamber 11b. Alternatively, if there a plurality of support members 31, a channel for the passage of the emissions may also be formed between the plurality of support members 31.

In this implementation, the provision of the support member 31 in the collection chamber 1 1b does not affect the discharge of the emissions from the battery cell 20, so as to ensure the safety performance of the battery cell 20. In addition, compared with the empty collection chamber 11b, the channel formed by the support member 31 can also extend the discharge path of the emissions in the collection chamber 11b, and reduce the temperature of the emissions after they are discharged from the case 11, further improving the safety performance of the battery and the power consumption device where it is located.

Optionally, in some implementations, the support member 31 of an embodiment of the present application may be provided with an orifice. The orifice is configured to form a channel in the support member 31, so as to allow the emissions discharged from the battery cell 20 through the pressure relief mechanism 213 to pass therethrough.

Optionally, the orifice configured to form the channel has various configurations. As an example, if the support member 31 is a support member of a solid structure, the orifice may be an orifice penetrating the support member 31 for forming a channel for the passage of the emissions from the battery cell 20. If the support member 31 is a support member of a hollow structure, an orifice may be provided in a wall of the support member 31, and the orifice may be configured to communicate the inner hollow of the support member 31 with the collection chamber 11b. The orifice and the hollow structure are each configured to form a channel for the passage of the emissions from the battery cell 20.

Compared with a support member 31 of a solid structure, the support member 31 of the hollow structure provides support for the collection chamber 11b and increases the compressive strength, while the weight of the support member 31 itself is smaller, which does not add a large weight to the battery, thereby increasing the energy density of the battery. Moreover, the support member 31 of the hollow structure having the orifice does not occupy too much space in the collection chamber 11b, and this can ensure that there is enough space in the collection chamber 11b for accommodating and collecting the emissions from the battery cell.

Optionally, the support member 31 of the hollow structure may be of a tubular structure with openings at two ends, the axial rigidity of the support member is relatively large, and the radial dimension thereof can be adapted to the height of the collection chamber 11b, thereby providing a good support for the collection chamber 11b. For the convenience of description, the tubular structures hereinafter are all tubular structures with openings at two ends.

In some implementations, the tubular structure has a cross-section in the shape of a hollow polygon, of which the number of sides is greater than or equal to 4, so as to improve the stability of the tubular structure in the collection chamber 11b. In some other implementations, the cross-section of the tubular structure may also be ring-shaped, racetrack-shaped or has other shapes, which will not be specifically limited in the embodiments of the present application.

As an example, as shown in (a) and (b) of Fig. 5, the support member 31 is of a strip-shaped tubular structure. In (a), the cross-section of the support member 31 is a hollow hexagon, and in (b), the cross-section of the support member 31 is a hollow quadrilateral. Optionally, the support member 31 shown in (c) of Fig. 5 may be of a ring-shaped tubular structure, and the cross-section of the support member is ring-shaped; and the support member 31 shown in (d) may be of a frame-shaped tubular structure, and the cross-section of the support member 31 is a hollow quadrilateral.

Optionally, a tube wall of the support member 31 of the tubular structure provided in an embodiment of the present application may have a thickness between 0.5 mm and 3 mm, so that not only can the rigidity and the compressive strength of the support member 31 of the tubular structure be ensured, but also the support member does not occupy a large space in the collection chamber 11b.

In addition, the support member 31 provided in the embodiment of the present application may be of a material with a good ductility and a high strength, which can buffer and resist external pressure and has a high compressive strength. As an example, the support member 31 may be of a metal material, such as copper and aluminum. Alternatively, the support member 21 may be of a non-metallic material with a certain strength, such as mica and ceramic.

To sum up, the various support members 31 provided in the embodiments of the present application have a good ductility, a high axial rigidity and a high compressive strength, so that they can provide good support for the collection chamber 11b, and increase the compressive strength of the collection chamber 11b. Moreover, when the support member 31 is of a hollow structure, such as a tubular structure, the support member 31 can not only increase the compressive strength of the collection chamber 11b, but can also form a channel in the support member 31 for the passage of the emissions from the battery cell, so that there is sufficient space in the collection chamber 11b to collect the emissions.

On the basis of the support members 31 shown in (a) and (b) of Fig. 5 hereinabove, Fig. 6 shows a schematic perspective view of another two support members 31 provided in the present application.

As shown in (a) and (b) of Fig. 6, the support member 31 of the tubular structure is provided with an orifice 310. The orifice 310 may be provided in at least part of a tube wall of the tubular structure. For example, as shown in (a) of Fig. 6, the orifices 310 may be provided in five tube side walls of a hexagonal tubular structure, and a plurality of orifices 310 may be provided in each tube side wall. The plurality of orifices 310 are arranged in an axial direction of the tubular structure. Optionally, the orifice 310 may be in the shape of a rectangle with rounded corners, a circle or any other shape.

In the embodiment shown in Fig. 6, the support member 31 is of a tubular structure. On the basis that a cavity of the tubular structure provides a channel for the emissions, a channel for the passage of the emissions is also formed between the orifice 310 and the cavity of the tubular structure. Moreover, if there a plurality of orifices 310, a channel for the passage of the emissions may also be formed between the plurality of orifices 310 provided in the tubular structure.

It can be understood that Fig. 6 is only for illustration, showing the arrangement of the orifices 310 when the support member 31 is of a tubular structure. If the support member 31 is of another hollow structure, the arrangement of the orifices 310 can also refer to the relevant description in the context. In addition, if the support member 31 is of a solid structure, the orifice 310 may be an orifice penetrating the support member 31. Except for the difference in the depth of the orifice, other related technical solutions can also refer to the relevant description in the context, which will not be described in detail herein.

Optionally, the channel formed by the orifice 310 in the support member 31 may be configured for the passage of gas and/or liquid in the emissions, and the support member 31 is configured to block solids in the emissions. As described above, the emissions from the battery cell include but are not limited to: an electrolytic solution, dissolved or split positive and negative electrode plates, fragments of a separator, high-temperature and high-pressure gas generated by reaction, sparks, etc. The emissions are all high-temperature substances. The solid substances such as the high-temperature positive and negative electrode plates, the high-temperature fragments of the separator and the sparks are directly discharged to the outside of the case 11 through a discharge valve, presenting a greater safety hazard. Through the technical solutions of the embodiments of the present application, the orifice 310 can allow for the passage of the high-temperature gas and/or the high-temperature liquid in the emissions, and the support member 31 can block the high-temperature solids in the emissions. That is, the orifice 310 in the support member 31 can filter the high-temperature solids from the emissions, to prevent the high-temperature solids in the emissions from being discharged out of the case 11 to cause potential safety hazards, thereby improving the safety of the battery and the power consumption device where it is located.

In order to realize the filtering effect of the orifices 310 described above, the orifices 310 in the support member 31 may have a mesh number of 5 or more. In other words, the orifices 310 in the support member 31 may have a diameter within 4 mm.

The mesh number refers to the number of perforations per inch of the mesh. The larger the mesh number, the more the perforations. In the embodiment of the present application, the orifices 310 in the support member 31 have a mesh number of 5 or more, that is, the diameter is less than about 4 mm, and this basically does not affect the support strength of the support member 31.

Optionally, the number of orifices 310 in the support member 31 may be greater than a preset threshold, so that more than a preset number of channels are formed in the support member 31. The fluidity of the emissions in the support member 31 can be improved, and a long enough discharge path can be formed to reduce the temperature of the emissions discharged from the case 11, thereby improving the safety of the battery and the power consumption device where it is located. Moreover, enough channels can also better filter the high-temperature solids from the emissions, further improving the safety of the battery and the power consumption device where it is located.

Further, in order to realize the temperature reducing effect of the channel formed in the support member 31 for the emissions, the support member 31 may be provided with a temperature reducing material to further reduce the temperature of the emissions passing through the channel, thereby improving the safety performance of the battery and the power consumption device where it is located.

Optionally, in some implementations, a temperature reducing material may be provided on a surface of the support member 31, for example, may be coated on the surface of the support member 31.

Optionally, in some other implementations, if the support member 31 is of a hollow structure, a temperature reducing material may also be arranged in the hollow structure.

As an example, the temperature reducing material used in the embodiments of the present application may be a phase change material (PCM) coating, and the phase change material may be melted after being brought into contact with the high-temperature emissions, absorb a large amount of heat, and reduce the temperature of the emissions.

Through the technical solutions of the embodiments of the present application, a temperature reducing material is provided on the support member 31. When the collection chamber 11b collects the high-temperature emissions from the battery cell, the temperature reducing material provided on the support member 31 can reduce the temperature of the high-temperature emissions to prevent the high-temperature emissions from causing potential safety hazards, so as to improve the safety performance of the battery and the power consumption device where it is located.

Further, if the support member 31 is of a hollow structure, the cavity of the hollow structure provides a channel for the emissions. Moreover, the temperature reducing material provided in the space in the cavity and/or on the surface of the hollow structure can be used to reduce the temperature of the emissions when the emissions passes through the channel.

Still further, if the support member 31 is provided with orifices 310, the orifices 310 provide more channels for the emissions. In addition to extending the discharge path of the emissions to reduce the temperature of the emissions, the temperature reducing material further reduces the temperature of the passing gas emissions and the filtered solid emissions, thereby further improving the safety performance of the battery and the power consumption device where it is located.

The structures of several support members 31 provided in the present application have been described above with reference to Figs. 5 and 6. Next, with reference to Figs. 7 to 26, the arrangement of the support member 31 in the collection chamber 11b will be illustrated.

Optionally, in an embodiment of the present application, the collection chamber 11b may be composed of a thermal management component 13 and a protective member. For example, as shown in Fig. 7, the case 11 further comprises a protective member 115. The protective member 115 is configured to protect the thermal management component 13, and the protective member 115 and the thermal management component 13 form the collection chamber 11b.

The collection chamber 11b formed by the protective member 115 and the thermal management component 13 does not occupy the space in the case 11 for accommodating the battery cells 20. It is therefore possible to provide a collection chamber 11b with a larger space, the emissions can be effectively collected and buffered, and the risk resulting therefrom can be reduced.

Optionally, in some implementations of the present application, the collection chamber 11b may be a sealed chamber. For example, the connection between the protective member 115 and the thermal management component 13 may be sealed by a sealing member.

Optionally, in some other implementations of the present application, the collection chamber 11b may not be a sealed chamber. For example, the collection chamber 11b may be in communication with the air outside the case 11, so that part of the emissions can be further discharged to the outside of the case 11. Optionally, the protective member 115 may be provided with a discharge valve through which the collection chamber 11b may be in communication with the air outside of the case.

Optionally, in the embodiment of the present application, the support member 31 in the collection chamber 11b may be fixedly arranged on the protective member 115 and/or the thermal management component 13. If the support member 31 is fixedly arranged on the protective member 115, the support member 31 is in contact with the protective member 115. In this case, the support member 31 may be also in contact with the thermal management component 13, or may maintain a certain gap with the thermal management component 13. Similarly, if the support member 31 is fixedly arranged on the thermal management component 13, the support member 31 may be also in contact with the protective member 115, or maintain a certain gap with the protective member 115.

As shown in Fig. 7, the support member 31 is in contact with both the protective member 115 and the thermal management component 13, so the support member 31 can provide support for both the protective member 115 and the thermal management component 13, so as to increase the overall compressive strength of the protective member 115 and the thermal management component 13, thereby preventing external pressure from affecting the battery cells 20 and other electrical components in the electrical chamber 11a on the other side of the thermal management component 13.

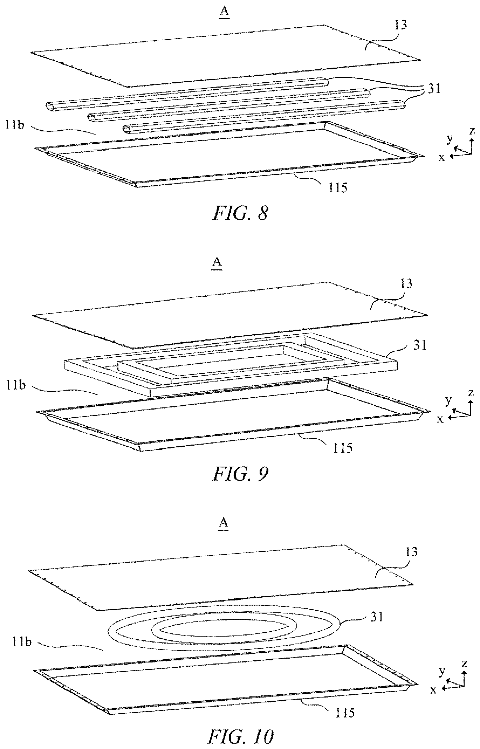

Fig. 8 shows a schematic exploded view of region A in the case 11 shown in Fig. 7.

As shown in Figs. 7 and 8, the support member 31 is of a strip-shaped tubular structure, and there are a plurality of support members 31. The plurality of support members 31 are parallel to each other, and are arranged apart from each other in the collection chamber 11b to provide uniform and comprehensive support for the collection chamber 11b, so as to uniformly and comprehensively increase the compressive strength of the collection chamber 11b.

Optionally, as shown in Fig. 8, the axial directions of the plurality of support members 31 are all parallel to the length direction of the case 11, i.e., x direction shown in Fig. 8. The coordinate system shown in Fig. 8 is the same as that in Fig. 7, in which z direction indicates the height direction of the case 11, which may be perpendicular to the horizontal ground, and x and y directions indicate the length and width directions of the case 11 respectively.

It should be noted that Figs. 7 and 8 are only examples, showing a schematic diagram of a plurality of strip-shaped support members 31 arranged in the collection chamber 11b. The plurality of strip-shaped support members 31 may also be arranged in the collection chamber 11b in other ways. For example, the axial directions of the plurality of support members 31 may also be parallel to the width direction of the case 11, i.e., the y direction shown in Fig. 8.

Optionally, in addition to being arranged in the collection chamber 11b in the way shown in Fig. 8, the plurality of support members 31 may be arranged in the collection chamber 11b in the way shown in Fig. 9 or 10. The coordinate systems in Figs. 9 and 10 are the same as the coordinate system in Fig. 8.

As shown in Fig. 9, in this implementation, the plurality of support members 31 are frame-shaped support members, and the plurality of frame-shaped support members are arranged around the center of the collection chamber 11b. The frame-shaped support member close to the center of the collection chamber 11b is smaller in size, the frame-shaped support remote from the center of the collection chamber 11b is larger in size, and there is a gap between two adjacent frame-shaped support members.

Similarly, as shown in Fig. 10, in this implementation, the plurality of support members 31 are ring-shaped support members, and the arrangement of the plurality of ring-shaped support members is similar to the arrangement of the plurality of frame-shaped support members as described above. For the sake of brevity, details are not repeated here.

Optionally, in the embodiments shown in Figs. 9 and 10 as described above, the frame-shaped support member or the ring-shaped support member may be of a hollow tubular structure. Optionally, the frame-shaped support member or the ring-shaped support member may have an orifice formed therein.

Optionally, in the embodiments shown in Figs. 8 to 10 as described above, the plurality of support members 31 are symmetrically arranged in the collection chamber 11b. Specifically, as shown in Fig. 8, among the plurality of strip-shaped support members 31, the middle strip-shaped support member 31 is located in the center of the collection chamber 11b and has an extending direction parallel to the length direction (x direction) of the case 11, and the other strip-shaped support members 31 are symmetrically distributed on two sides of the middle strip-shaped support member 31 in the width direction (y direction) of the case 11.

As shown in Figs. 9 and 10, each of the plurality of frame-shaped support members 31 or the plurality of ring-shaped support members 31 is arranged around the center of the collection chamber 11b, and the support members are symmetrically arranged with respect to the center of the collection chamber 11b.

Through the technical solutions of the embodiments of the present application, the plurality of support members 31 are symmetrically arranged in the collection chamber 11b, which can improve the stability of the collection chamber 11b, thereby improving the stability of mounting of the case 11 in its apparatus.

Optionally, in the present application, the arrangement of the support member 31 in the collection chamber 11b is also related to the position of the battery cell. Specifically, the arrangement of the support member 31 in the collection chamber 11b is related to the position of the pressure relief mechanism 213 in the battery cell 20.

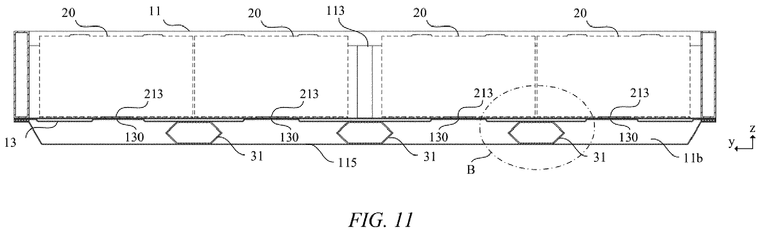

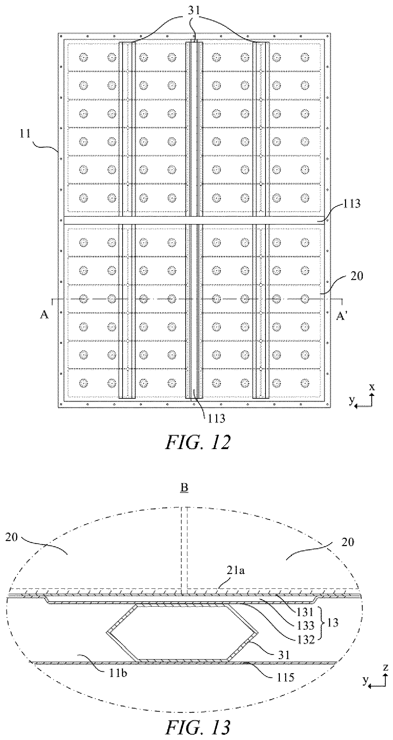

Fig. 11 shows a schematic cross-sectional view of a case 11 of a battery provided in another embodiment of the present application. Fig. 12 is a top view of the case 11 of the battery shown in Fig. 11. Fig. 11 may be a cross-sectional view along the direction A-A' in Fig. 12.

In order to facilitate the comparison of the positional relationship between the plurality of battery cells 20 and the support member 31 in the case 11 of the battery, the plurality of battery cells 20 in the case are illustrated with dotted lines in Figs. 11 and 12.

As shown in Fig. 11, the thermal management component 13 is provided with a pressure relief region 130. The pressure relief region 130 may be arranged opposite the pressure relief mechanism 213 of the battery cell 20. When the pressure relief mechanism 213 is actuated, the emissions inside the battery cell 20 is discharged through the pressure relief region 130.

Optionally, in some implementations, the pressure relief region 130 of the thermal management component 13 may not be subjected to any special treatment. In the embodiment of the present application, only for the purpose of representing a partial region of the thermal management component 13 opposite the pressure relief mechanism 213, this partial region is called the pressure relief region 130.

Optionally, in some other implementations, the pressure relief region 130 of the thermal management component 13 may alternatively be specially treated such that it can be more likely to be damaged when the pressure relief mechanism 213 is actuated.

As an example, the pressure relief region 130 may be a weakened region, the strength of which is smaller than those of other regions in the thermal management component 13 except the pressure relief region 130.

Optionally, the thermal management component 13 is provided with a recess arranged opposite the pressure relief mechanism 213, and a bottom wall of the recess forms the weakened region. Since the bottom wall of the recess is weaker than other regions of the thermal management component 13, the bottom wall is likely to be damaged by the emissions. When the pressure relief mechanism 213 is actuated, the emissions can damage the bottom wall of the recess and enter the collection chamber 11b.

Optionally, it is also possible to form a weakened region in the thermal management component 13 as the pressure relief region 130 in other ways. For example, an indentation is provided in the thermal management component 13 to form a weakened region, etc., which will not be specifically limited in the present application.

Through the technical solution of this implementation, the partial region (i.e. the pressure relief region 130) of the thermal management component 13 opposite the pressure relief mechanism 213 is configured as a weakened region, such that when the pressure relief mechanism 213 is actuated, the emissions from the battery cell 20 impact and open the weakened region more easily, and the emissions from the battery cell 20 are collected by the collection chamber 11b through the weakened region, preventing the emissions from affecting the electrical components in the electrical chamber 11a.

As shown in Figs. 11 and 12, in an embodiment of the present application, the support member 31 is arranged corresponding to a non-pressure relief region of the thermal management component 13 to form a channel for the passage of the emissions from the battery cell 20, so that the emissions are collected by the collection chamber 11b. The non-pressure relief region refers to other regions in the thermal management component 13 except the pressure relief region 130. In the height direction (z direction) of the case 11, the support member 31 is arranged below the non-pressure relief region.

Through the technical solutions of the embodiments of the present application, the support member 31 is arranged corresponding to the non-pressure relief region of the thermal management component 13, so as to prevent the support member 31 from affecting the pressure relief region 130 of the thermal management component 13 and the opposite pressure relief mechanism 213, for example, from blocking the emissions discharged from the interior of the battery cell 20 through the pressure relief mechanism 213 and the pressure relief region 130 so that the emissions cannot be collected by the collection chamber 11b. Therefore, based on the support member 31 provided in the embodiment of the present application, the safety performance of the battery cell 20 is not affected while increasing the compressive strength of the collection chamber 11b.

Optionally, as shown in Fig. 11, the support member 31 may be in contact with the non-pressure relief region of the thermal management component 13, so as to ensure that the support member 31 has a good supporting effect on the thermal management component 13. Further, the support member 31 is in contact with both the protective member 115 and the non-pressure relief region of the thermal management component 13, so the support member 31 can provide support for both the protective member 115 and the thermal management component 13, so as to increase the overall compressive strength of the protective member 115 and the thermal management component 13, thereby preventing external pressure from affecting the battery cells 20 and other electrical components in the electrical chamber 11a on the other side of the thermal management component 13.

Optionally, as an example, in the embodiment shown in Fig. 12, four rows of battery cells 20 are arranged in the width direction (y direction) of the case 11, and each row of battery cells 20 is arranged in the length direction (x direction) of the case 11. In this embodiment, a support member 31 of a strip-shaped structure may be correspondingly arranged between two adjacent rows of battery cells 20, and the extending direction of the strip-shaped support member 31 is the same as the arrangement direction of each row of battery cells 20. That is, in the embodiment of the present application, the support member 31 of the strip-shaped structure extends in the length direction (x direction) of the case 11. In the height direction (z direction) of the case 11, each support member 31 of the strip-shaped structure is correspondingly arranged below two adjacent rows of battery cells.

Through the technical solutions of the embodiments of the present application, by arranging a support member 31 between two adjacent rows of battery cells, in addition to avoiding the impact of the support member 31 on the safety performance of the battery cells, it can be ensured that the support member 31 supports the thermal management component 13 and all the battery cells 20 uniformly and completely. Furthermore, the support member 31 is configured to have a strip-shaped structure and extend in the length direction of the case 11, so that a small number of support members that are easy to mount can be used to achieve a good supporting effect.

Fig. 13 shows a partially enlarged schematic view of region B in Fig. 11.

The thermal management component 13 may form a fluid flow channel from a thermally conductive material. The fluid flows in the flow channel and conducts heat through the thermally conductive material to reduce the temperature of the battery cell 20.

Optionally, as shown in Figs. 13, in an embodiment of the present application, the thermal management component 13 may comprise a first thermally conductive plate 131 and a second thermally conductive plate 132. The first thermally conductive plate 131 and the second thermally conductive plate 132 form a flow channel 133 for accommodating a fluid. The first thermally conductive plate 131 is located between the first wall 21a of the battery cell 20 and the second thermally conductive plate 132 and is attached to the first wall 21a.

In an embodiment of the present application, the non-pressure relief region of the thermal management component 13 is provided with a flow channel 133, the support member 31 may be in contact with the second thermally conductive plate 132, and the support member 31 is located below the flow channel 133 in the height direction (z direction) of the case 11.

Optionally, in the embodiments shown in Figs. 11 to 13, the support member 31 is of a strip-shaped tubular structure, for example, it may specifically be of the structure shown in (a) of Fig. 5 or (a) of Fig. 6, or may be of the structure shown in (b) of Fig. 5 or (b) of Fig. 6.

It should be noted that, in the above embodiments, the support member 31 of a strip-shaped structure is taken as an example to illustrate the arrangement of the support member 31 of the strip-shaped structure in the collection chamber 11b. In addition to the length direction (x direction) of the case 11, the extending direction of the support member 31 of the strip-shaped structure may also be the width direction (y direction) of the case 11. Furthermore, it is not necessary to correspondingly provide a support member 31 between every two adjacent rows of battery cells 20, or a support member 31 may be only correspondingly arranged between some two adjacent rows of battery cells 20.

It should also be noted that, in the above embodiments, the support member 31 may be of a frame-shaped structure or a ring-shaped structure other than the strip-shaped structure. When the support member 31 is of a frame-shaped structure or a ring-shaped structure, the support member 31 is arranged in the collection chamber 11b in such a way that the support member 31 is arranged corresponding to the non-pressure relief region of the thermal management component 13, without affecting the discharge of the emissions from the battery cell 20 by the pressure relief region 130 of the thermal management component 13 and its opposite pressure relief mechanism 123.

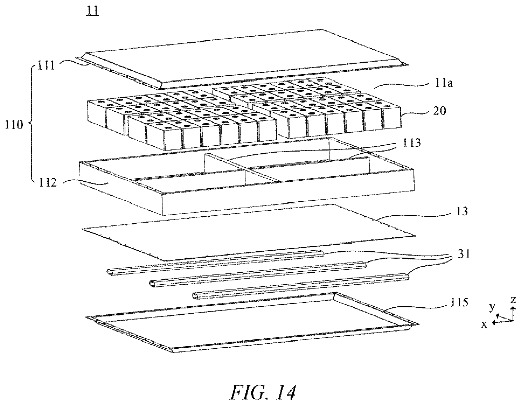

In order to describe the structural diagram of the case 11 of the battery in the embodiment of the present application in more detail, Fig. 14 shows an exploded view of the case 11 of the battery shown in Figs. 11 and 12.

As shown in Figs. 11 and 14, the case 11 further comprises an enclosure 110 having an opening. The enclosure 110 having the opening is a semi-closed chamber with an opening in communication with the outside, and the thermal management component 13 covers the opening to form a chamber, i.e., an electrical chamber 11a.

Optionally, the enclosure 110 may be composed of multiple portions. For example, as shown in Figs. 11 and 14, the enclosure 110 may comprise a first portion 111 and a second portion 112. Two sides of the second portion 112 have openings, respectively. The first portion 111 covers the opening on one side of the second portion 112, and the thermal management component 13 covers the opening on the other side of the second portion 112, thereby forming the electrical chamber 11a.

The embodiments of Figs. 11 and 14 may be obtained through improvements on the basis of Fig. 2. Specifically, a bottom wall of the second portion 112 in Fig. 2 may be replaced with the thermal management component 13, and the thermal management component 13 acts as a wall of the electrical chamber 11a, thereby forming the electrical chamber 11a in Figs. 11 and 14. In other words, the bottom wall of the second portion 112 in Fig. 2 can be omitted. That is, a ring-shaped wall with openings on two sides is formed, and the first portion 111 and the thermal management component 13 cover the openings on the two sides of the second portion 112 respectively to form a chamber, i.e., an electrical chamber 11a.

Optionally, the case 11 of the battery of the embodiment of the present application further comprises an isolation member 113. The isolation member 113 is arranged in the second portion 112. When the plurality of battery cells 20 are accommodated in the electrical chamber 11a, the isolation member 113 is configured to isolate the plurality of battery cells 20 into multiple groups, and each group of battery cells 20 comprises at least one battery cell. Optionally, in some implementations, the isolation member 113 may also be referred to as a cross beam.

As an example, as shown in Figs. 11, 12 and 14, isolation members 113 isolate the plurality of battery cells into four groups of equal numbers, and the groups of battery cells are isolated from each other by the isolation members 113. Compared with directly arranging the plurality of battery cells 20 in the electrical chamber 11a with a large space, through the technical solutions of the embodiments of the present application, the plurality of battery cells in the electrical chamber 11a are isolated by the isolation members 113, so that not only can the mounting stability of the plurality of battery cells in the case be improved, but also the influence caused by thermal failure of a battery cell on the other battery cells can be reduced, thereby improving the safety of the battery.

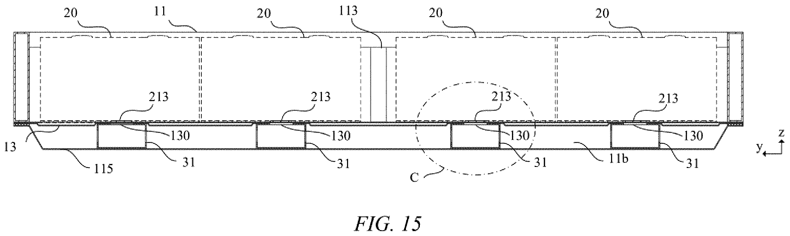

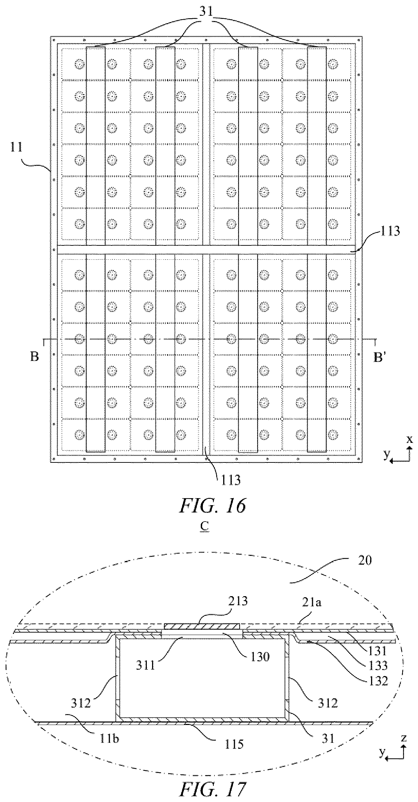

Fig. 15 shows a schematic cross-sectional view of a case 11 of a battery provided in another embodiment of the present application. Fig. 16 is a top view of the case 11 of the battery of the example shown in Fig. 15. Fig. 15 may be a cross-sectional view along the direction B-B' in Fig. 16.

In order to facilitate the comparison of the positional relationship between the plurality of battery cells 20 and the support member 31 in the case 11 of the battery, the plurality of battery cells 20 in the case are illustrated with dotted lines in Figs. 15 and 16.

As shown in Fig. 15, the thermal management component 13 is provided with a pressure relief region 130. The pressure relief region 130 may be arranged opposite the pressure relief mechanism 213 of the battery cell 20. When the pressure relief mechanism 213 is actuated, the emissions inside the battery cell 20 is discharged through the pressure relief region 130.

Specifically, for the relevant configuration of the pressure relief region 130 in the embodiment of the present application, reference can be made to the relevant description implemented above.

In addition, in an embodiment of the present application, the support member 31 is provided with a first orifice. The first orifice is arranged corresponding to the pressure relief region 130 of the thermal management component 13 to form a channel in the support member 31 for the passage of the emissions from the battery cell.

In order to more clearly show the arrangement of the first orifice and the pressure relief region 130, Fig. 17 shows a partially enlarged schematic view of part C in Fig. 15.

As shown in Fig. 17, the support member 31 may be of a tubular structure, a tube wall of the support member 31 is provided with a first orifice 311, and the first orifice 311 is arranged opposite the pressure relief region 130 of the thermal management component 13 so that the first orifice 311 receives the emissions discharged from the battery cell through the pressure relief valve 213 and the pressure relief region 130.

Optionally, in the embodiment shown in Fig. 17, the thermal management component 13 comprises a first thermally conductive plate 131 and a second thermally conductive plate 132. The first thermally conductive plate 131 and the second thermally conductive plate 132 are connected to each other, and partial regions of the first thermally conductive plate 131 and the second thermally conductive plate 132 that are opposite the pressure relief mechanism 213 are each designed as a through hole to form the pressure relief region 130. In addition, in the non-pressure relief region of the thermal management component 13, the first thermally conductive plate 131 and the second thermally conductive plate 132 further have flow channels 133 formed therein for accommodating a fluid to reduce the temperature of the battery cells 20.

It can be understood that, in addition to the pressure relief region 130 of the thermal management component 13 being designed as a through hole as shown in Fig. 17, alternatively, the pressure relief region 130 may be designed as other structures such as a weakened region, which will not be specifically limited in the embodiments of the present application.

Through the technical solutions of the embodiments of the present application, the first orifice 311 in the support member 31 is arranged corresponding to the pressure relief region 130 of the thermal management component 13. While the support member 31 realizes the support function, the first orifice 311 provided therein also facilitates the receiving of the emissions discharged from the battery cell through the pressure relief region 130. The emissions can be collected into the collection chamber 11b of the case 11 after passing through the first orifice 311, so as to prevent the emissions from affecting the electrical means in the electrical chamber 11a.

Optionally, in order to achieve a good conduction effect of the first orifice 311 on the emissions, the first orifice 311 may be in communication with the pressure relief region 130 of the thermal management component 13. Optionally, the first orifice 311 may have a cross-sectional area not less than the area of the pressure relief region 130, so as to further improve the good conduction effect of the first orifice 311 on the emissions.

Optionally, as an example, in the embodiments shown in Figs. 15 and 16, four rows of battery cells 20 are arranged in the width direction (y direction) of the case 11, and each row of battery cells 20 is arranged in the length direction (x direction) of the case 11. In this embodiment, a support member 31 of a strip-shaped structure may be arranged corresponding to each row of battery cells 20, and the extending direction of the strip-shaped support member 31 is the same as the arrangement direction of each row of battery cells 20. That is, in the embodiment of the present application, the support member 31 of the strip-shaped structure extends in the length direction (x direction) of the case 11. In the height direction (z direction) of the case 11, each support member 31 of the strip-shaped structure is correspondingly arranged below the pressure relief mechanism 213 of each row of battery cells 20.

Through the technical solutions of the embodiments of the present application, the support member 31 is configured to have a strip-shaped structure and extend in the length direction of the case 11, so that a small number of support members 31 that are easy to mount can be used to achieve a good supporting effect.

Optionally, in the above embodiments of the present application, a connecting face of the support member 31 may be in contact with the thermal management component 13 and/or the protective member 115, and a non-connecting face of the support member 31, that is, the face of the support member 31 that is not in contact with the thermal management component 13 and/or the protective member 115, may be provided with a second orifice to form a channel in the support member 13 for the passage of the emissions.

As an example, in the embodiments shown in Figs. 15 to 17 hereinabove, in addition to the first orifice 311, the support member 31 may be provided with a second orifice 312 to add a discharge path for the passage of the emissions from the battery cell 20.

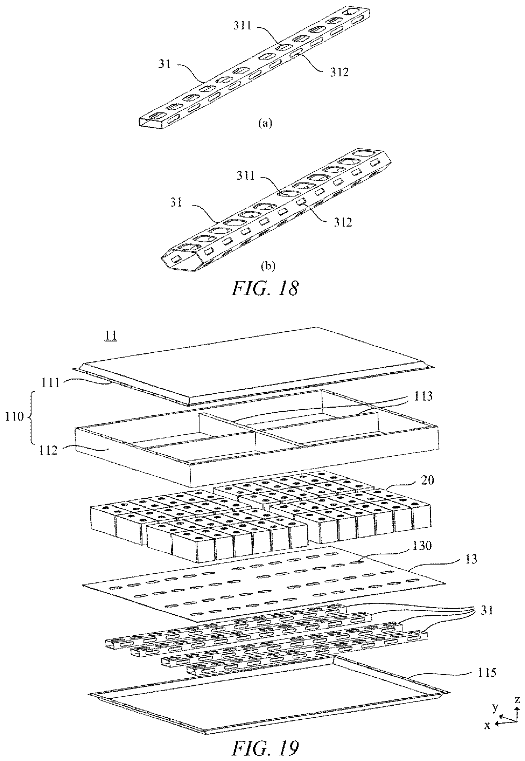

(a) of Fig. 18 shows a perspective schematic structural diagram of the support member 31 in the embodiments shown in Figs. 15 to 17 hereinabove.

As shown in (a) of Fig. 18, the support member 31 is of a quadrilateral tubular structure, first orifices 311 are provided in one side wall of the quadrangular tubular structure, and the other side walls of the quadrangular tubular structure may also be provided with second orifices 312. The first orifices 311 and the second orifices 312 may be each configured to form a discharge channel for the passage of the emissions from the battery cell.

Furthermore, in the embodiments shown in Figs. 15 to 17 hereinabove, the support member 31 may also be of the structure shown in (b) of Fig. 18, that is, the support member 31 is a hexagonal tubular structure. Similar to the structure shown in (a) of Fig. 18, first orifices 311 are provided in one side wall of the hexagonal tubular structure, and the other side walls of the hexagonal tubular structure may also be provided with second orifices 312.

Optionally, the sizes of the first orifice 311 and the second orifice 312 may be different, for example, the size of the first orifice 311 is larger than the size of the second orifice 312, so that the first orifice 311 with a larger size allows for the passage of the emissions discharged through the pressure relief mechanism 213 and will not block the discharge of the emissions, while the second orifice 312 with a smaller size can play a filtering role. That is, the second orifice 312 allows for the passage of the high-temperature gas and/or the high-temperature liquid in the emissions, and the support member 31 blocks the high-temperature solids in the emissions, to prevent the high-temperature solids in the emissions from being discharged out of the case 11 to cause potential safety hazards, thereby improving the safety of the battery and the power consumption device where it is located.

Fig. 19 shows an exploded view of the case 11 of the battery shown in Figs. 15 and 16.

As shown in Fig. 19, four rows of battery cells 20 are arranged in the width direction (y direction) of the case 11, four support members 31 are arranged in the collection chamber 11b, four rows of pressure relief regions 130 are arranged in the thermal management component 13 corresponding to the four rows of battery cells 20, and the first orifices 311 in each support member 31 are arranged corresponding to one row of pressure relief regions 130.

Optionally, in the embodiment of the present application, except that the number and arrangement of the support members 31 and the structure of the thermal management component 13 are different from those in the embodiment shown in Fig. 14 hereinabove, the specific structure of the case 11 can refer to the relevant description of the embodiment shown in Fig. 14 hereinabove, which will not be described in detail herein.

In addition, it should be noted that, in the embodiment shown in Fig. 14, the thermal management component 13 may also be configured to have the same structure as the thermal management component 13 in the embodiment of the present application. That is, in the embodiment shown in Fig. 14, the thermal management component 13 may be also provided with a pressure relief region 130, so that the emissions are discharged from the battery cell 20 to the collection chamber 11b through the pressure relief mechanism 213 and the pressure relief region 130.

Optionally, in the above embodiments, a plurality of support members 31 are arranged apart from each other in the collection chamber 11b. Optionally, a plurality of support members 31 may also be stacked one above the other and arranged in the collection chamber 11b.

In some implementations, the plurality of support members 31 may be of a hexagonal tubular structure, the plurality of support members 31 of the hexagonal tubular structure may be stacked one above the other and connected to each other, and the plurality support members 31 of the hexagonal tubular structures have a cross-section of a honeycomb-shaped structure.

Through the technical solutions of the embodiments of the present application, the collection chamber 1 1b of the case 11 of the battery is provided with a honeycomb-shaped tubular support member having a single-point yield, a large axial rigidity and a high compressive strength, so that the compressive strength of the collection chamber 11b can be increased, thereby improving the safety performance of the battery and the power consumption device where it is located.

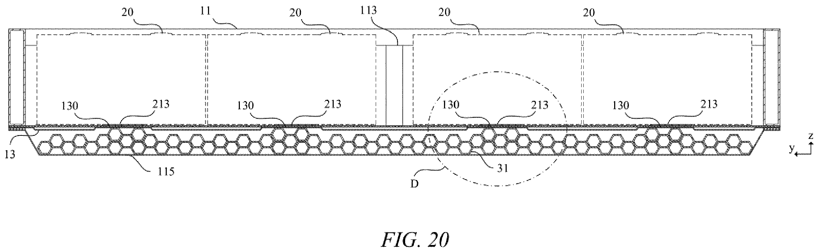

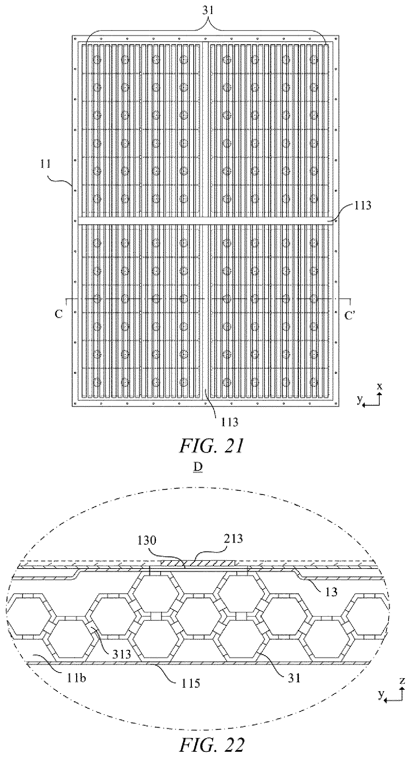

As an example, Fig. 20 shows a schematic cross-sectional view of a case 11 of a battery provided in another embodiment of the present application. Fig. 21 is a top view of the case 11 of the battery of the example shown in Fig. 20. Fig. 20 may be a cross-sectional view along the direction C-C' in Fig. 21.

In order to facilitate the comparison of the positional relationship between the plurality of battery cells 20 and the support member 31 in the case 11 of the battery, the plurality of battery cells 20 in the case are illustrated with dotted lines in Figs. 20 and 21.

Optionally, as shown in Figs. 20 and 21, the axial direction of the plurality of support members 31 of the hexagonal tubular structure is parallel to the length direction (x direction) of the case 11, and the plurality of support members 31 of the hexagonal tubular structure have a cross-section (a cross-section along a plane where the y and z directions are located) of a honeycomb-shaped structure.

In the length direction (x direction) of the case 11, the length of each support member 31 of the plurality of support members 31 of the hexagonal tubular structure is similar to the length of the collection chamber 11b; and in the width direction (y direction) of the case 11, the overall width of the plurality of support members 31 of the hexagonal tubular structure is similar to the width of the collection chamber 11b. In other words, in the embodiment of the present application, the plurality of support members 31 of the hexagonal tubular structure can comprehensively cover the collection chamber 11b in the length direction and the width direction. In addition, the plurality of support members 31 of the hexagonal tubular structure are connected to each other, and the support members 31 have a high density in the collection chamber 11b, so as to comprehensively and densely increase the compressive strength of the collection chamber 11b.

Furthermore, except that the axial direction of the plurality of support members 31 of the hexagonal tubular structure may be parallel to the length direction (x direction) of the case 11, the axial direction of the plurality of support members 31 of the hexagonal tubular structure may be parallel to the width direction (y direction) of the case 11, and the plurality of support members 31 of the hexagonal tubular structure have a cross-section (a cross-section along a plane where the x and z directions are located) of a honeycomb-shaped structure.

Optionally, as shown in Fig. 20, a plurality of support members 31 of a tubular structure are arranged on the protective member 115 of the case 11, and some support members 31 of the plurality of support members 31 of the hexagonal tubular structure are in contact with the thermal management component 13. For example, in the embodiment shown in Fig. 20, some of the support members 31 are in contact with the pressure relief regions 130 of the thermal management component 13 corresponding to the pressure relief mechanisms 213 of the battery cells.

Optionally, in the embodiment of the present application, the support members 31 may be provided with orifices, and the connecting faces of the support members 31 connected to each other may be provided with orifices 310 corresponding to each other. The orifice 310 is configured to form a channel in the support member 31 for the passage of the emissions from the battery cell.

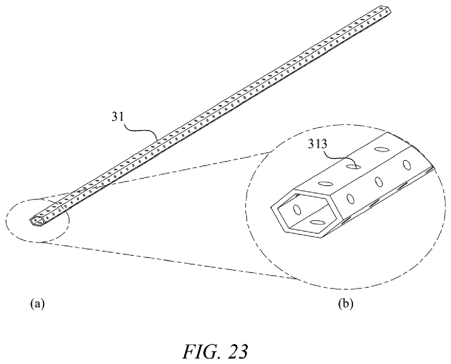

In order to more clearly show the arrangement of the orifice in the support member 31, Fig. 22 shows a partially enlarged schematic view of part D in Fig. 20. Fig. 23 shows a perspective structural view of the support member 31.

As shown in Figs. 22 and 23, in an embodiment of the present application, a tube wall of the support member 31 of the tubular structure may be provided with an orifice 313, and the connecting faces of the support members 31 connected to each other are provided with orifices 313 corresponding to each other. The orifices 313, which correspond to each other, are configured to form a channel in the two support member of the tubular structures for the passage of the emissions. In addition, an orifice 313 in the non-connecting face of the support member 31 may form a channel between the support member 31 and the collection chamber 11b.

Through the technical solutions of the embodiments of the present application, there a large number of support members 31, which are connected to each other and provide relatively stable support for the collection chamber 11b; in addition, the orifices 313 provided in the support members 31 can provide channels between the interconnected support members 31 and channels between the support members 31 and the collection chamber 11b; therefore, through this implementation, a larger number of channels can be formed in the support members 31 to add discharge paths of the emissions from the battery cell in the channels, so as to reduce the temperature of the emissions discharged from the collection chamber 11b and improve the safety performance of the battery.

Referring to Fig. 23, (a) of Fig. 23 is an overall perspective view of the support member 31, and (b) of Fig. 23 is a partially enlarged view of (a). As shown in Fig. 23, in an embodiment of the present application, the support members 31 have a small tube diameter, so that they are convenient to be connected to each other in the collection chamber 11b to form a honeycomb-shaped structure. Therefore, the width of the tube wall on each side of the support member 31 is correspondingly small, and the diameter of the orifice 313 formed in the tube wall on each side is also small.

Through the technical solutions of the embodiments of the present application, the orifices 313 with a smaller diameter are formed in the support member 31 to facilitate the passage of the high-temperature gas and/or the high-temperature liquid in the emissions from the battery cell, while blocking the discharge of the high-temperature solids in the emissions, to prevent the high-temperature solids from being discharged out of the collection chamber 11b to cause a greater safety hazard.

Optionally, in an embodiment of the present application, the orifices 313 in the support member 31 may have a mesh number of 5 or more. In other words, in the embodiment of the present application, the orifices 313 may have a diameter of 4 mm or less.

Referring back to Fig. 22, optionally, in an embodiment of the present application, in the thermal management component 13 is provided with a pressure relief region 130 opposite the pressure relief mechanism 213, facilitating the discharge of the emissions from the battery cell through the pressure relief mechanism 213 and the pressure relief region 130. For example, in the embodiment shown in Fig. 22, the pressure relief region 130 may be a through hole. Alternatively, in other embodiments, the pressure relief region 130 may be of other structures described in the above embodiments, which will not be specifically limited in the embodiments of the present application.

In addition, in the embodiment of the present application, the related technical solutions of the thermal management component 13 and other structural members in the case 11 can also refer to the relevant description of those in the above embodiments, which will not be described in detail herein.

The support member 31 described in the above embodiments can be arranged in the collection chamber 11b by means of various fixing methods, so as to prevent the support member 31 from moving in the collection chamber 11b and affecting the reliability of the battery.

For example, in an implementation, the thermal management component 13 and/or the protective member 115 forming the collection chamber 11b are provided with a fixing member for fixing the support member 31. Optionally, the fixing member includes, but is not limited to, an adhesive layer, a bolt, a slot, and the like.

For another example, in another implementation, the support member 31 and the protective member 115 may be of an integrated structure. Optionally, the support member 31 and the protective member 115 may be formed into an integrated structure through a process such as welding.

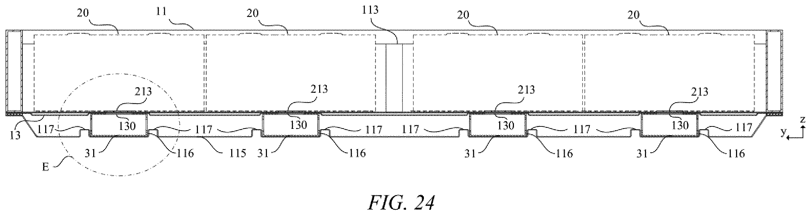

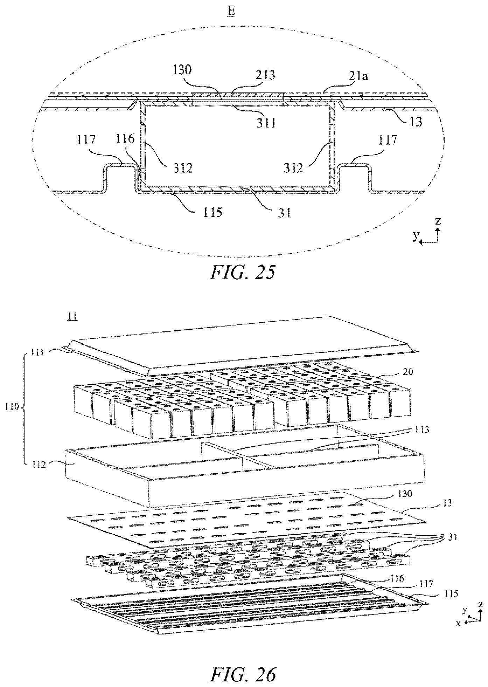

As an example, Fig. 24 shows a schematic cross-sectional view of a case 11 of a battery provided in another embodiment of the present application. Fig. 25 shows a partially enlarged view of part E of Fig. 24.

As shown in Figs. 24 and 25, the protective member 115 is provided with a U-shaped groove 116. The support member 31 is arranged in the U-shaped groove 116, and the width of the U-shaped groove 116 is equivalent to that of the support member 31, such that the support member 31 is fixedly arranged on the protective member 115. Through this implementation, the mounting method of the support member 31 is simple, and the disassembly and replacement of the support member 31 are convenient, thereby improving the mounting efficiency and the maintenance efficiency of the case 11 of the battery.

Optionally, as shown in Figs. 24 and 25, protrusions 117 facing the inside of the case 11 may be formed on the protective member 115, and a U-shaped groove 116 may be formed between adjacent protrusions 117. Through the technical solutions of the embodiments of the present application, the protrusions 117 and the U-shaped grooves 116 are directly formed from the protective member 115, so that the use of additional structural members to form the U-shaped grooves can be avoided, thereby reducing the manufacturing cost. In addition, it is also possible to prevent the additional structural members from adversely affecting the protective member 115, the support members 31 and other components in the case 11, thereby improving the safety and reliability of the battery.

Of course, as an alternative implementation, in an embodiment of the present application, additional structural members may also be used, which are arranged on the protective member 115, so that U-shaped grooves are formed on the protective member 115.

Fig. 26 shows an exploded view of the case 11 of the battery shown in Fig. 24.

As shown in Fig. 26, optionally, in an embodiment of the present application, the support member 31 is a strip-shaped support member 31, and the protective member 115 is provided with a strip-shaped U-shaped groove 116 to be adapted to the strip-shaped support member 31. As an example, in this embodiment, the strip-shaped support member 31 extends in the length direction (x direction) of the case 11, and the strip-shaped U-shaped groove 116 then also extends in the length direction (x direction) of the case 11. The length of the U-shaped groove 116 is equivalent to that of the strip-shaped support member 31.

It can be understood that Fig. 26 only schematically shows a schematic diagram of the strip-shaped support member 31 and the strip-shaped U-shaped groove 116. If the support member 31 is in other shapes, such as a ring or a frame, the U-shaped groove 116 may also be configured as a ring-shaped U-shaped groove or a frame-shaped U-shaped groove to be adapted to the ring-shaped support member 31 or the frame-shaped support member 31.

Since the length and the width of the U-shaped groove 116 in the embodiment of the present application are respectively equivalent to those of the support member 31, the relatively stable fixed arrangement of the support member 31 in the U-shaped groove can be realized by matching the dimensions in the two directions. Therefore, referring back to Fig. 24, optionally, the depth of the U-shaped groove 116 may be smaller than the height of the support member 31, that is, the raised height of the protrusion 117 of the protective member 115 may be smaller than the height of the support member 31, reducing the machining difficulty of the protrusion 117.

Optionally, in the embodiment of the present application, the related technical solutions of the support member 31 and other structural members in the case 11 can refer to the relevant description of those in the above embodiments, which will not be described in detail herein.

Furthermore, except that the support member 31 being fixedly arranged on the protective member 115 by means of the above-mentioned U-shaped groove 116, the support member 31 may be fixed by means of other types of fixing members such as a bolt. For example, the protective member 115 is provided with a fixing bolt, which may pass through the support member 31 to support and fix the support member 31. Optionally, the bolt may pass through an orifice in the support member 31 and be connected to other structural members of the case 11, to enhance the stability of the support member 31. In some implementations, the bolt may pass through the orifice of the support member 31 and through the thermal management component 13, and then be connected to the isolation member 113 of the case 11. With this implementation, the bolt can not only enhance the fixing of the support member 31, but can also enhance the fixing of the thermal management component 13. While enhancing the overall stability of the case 11, relative movement between the support member 31 and the thermal management component 13 is prevented, thereby preventing the support member 31 from affecting the thermal management component 13 and improving the safety of the battery.

An embodiment of the present application further provides a battery 10. The battery 10 may comprise a plurality of battery cells 20, and the case 11 described in the foregoing embodiments. The case 11 is configured to accommodate a plurality of battery cells 20. At least one battery cell 20 of the plurality of battery cells 20 comprises a pressure relief mechanism 213, and the pressure relief mechanism 213 is configured, when an internal pressure or temperature of the battery cell 20 provided with the pressure relief mechanism 213 reaches a threshold, to be actuated to relieve the internal pressure.

An embodiment of the present application further provides a power consumption apparatus which may comprise the battery 10 according to the foregoing embodiments. The battery 10 is configured to supply electric energy to the power consumption apparatus. Optionally, the power consumption apparatus may be a vehicle 1, a ship or a spacecraft.

The case 11 of the battery, the battery 10 and the power consumption apparatus according to the embodiments of the present application are described above, a method and apparatus for manufacturing a battery according to the embodiments of the present application will be described below. For the parts not described in detail, reference can be made to the foregoing embodiments.

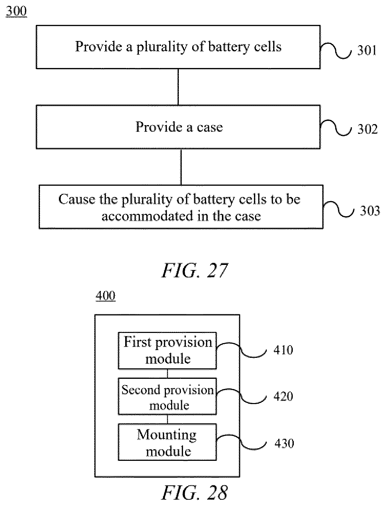

Fig. 27 shows a schematic flowchart of a method 300 for manufacturing a battery according to an embodiment of the present application. As shown in Fig. 27, the method 300 may comprise the following steps.

In step 301, a plurality of battery cells 20 are provided, wherein at least one battery cell 20 of the plurality of battery cells 20 comprises a pressure relief mechanism 213, and the pressure relief mechanism 213 is configured, when an internal pressure or temperature of the battery cell 20 provided with the pressure relief mechanism 213 reaches a threshold, to be actuated to relieve the internal pressure or temperature.

In step 302, a case 11 is provided, the case 11 comprising: an electrical chamber 11a configured to accommodate the plurality of battery cells 20; a thermal management component 13 configured to accommodate a fluid to adjust the temperature of the plurality of battery cells 20; and a collection chamber 11b configured to collect emissions from the battery cell 20 provided with the pressure relief mechanism 213 when the pressure relief mechanism 213 is actuated. The thermal management component 13 is configured to isolate the electrical chamber 11a from the collection chamber 11b. A support member 31 is provided in the collection chamber 11b. The support member 31 is configured to increase the compressive strength of collection chamber 11b.

In step 303, the plurality of battery cells 20 are caused to be accommodated in the case 11.

Fig. 28 shows a schematic block diagram of an apparatus 400 for manufacturing a battery according to an embodiment of the present application. As shown in Fig. 28, the apparatus 400 for manufacturing a battery may comprise: a first provision module 410, a second provision module 420 and a mounting module 43.

The first provision module 410 is configured to a plurality of battery cells 20, wherein at least one battery cell 20 of the plurality of battery cells 20 comprises a pressure relief mechanism 213, and the pressure relief mechanism 213 is configured, when an internal pressure or temperature of the battery cell 20 provided with the pressure relief mechanism 213 reaches a threshold, to be actuated to relieve the internal pressure or temperature.

The second provision module 420 is configured to provide a case 11, the case 11 comprising: an electrical chamber 11a configured to accommodate the plurality of battery cells 20; a thermal management component 13 configured to accommodate a fluid to adjust the temperature of the plurality of battery cells 20; and a collection chamber 11b configured to collect emissions from the battery cell 20 provided with the pressure relief mechanism 213 when the pressure relief mechanism 213 is actuated. The thermal management component 13 is configured to isolate the electrical chamber 11a from the collection chamber 11b. A support member 31 is provided in the collection chamber 11b. The support member 31 is configured to increase the compressive strength of collection chamber 11b.

The mounting module 430 is configured to cause the plurality of battery cells 20 to be accommodated in the case 11.

While the present application has been described with reference to the preferred embodiments, various modifications may be made and equivalents may be provided to substitute for the components thereof without departing from the scope of the present application. In particular, the technical features mentioned in the embodiments can be combined in any manner, as long as there is no structural conflict. The present application is not limited to the specific embodiments disclosed herein, but includes all technical solutions that fall within the scope of the claims.

## Claims

1. A case of a battery, **characterized by** comprising:
an electrical chamber (11a) configured to accommodate a plurality of battery cells (20), wherein at least one battery cell (20) of the plurality of battery cells (20) comprises a pressure relief mechanism (213), and the pressure relief mechanism (213) is configured, when an internal pressure or temperature of the battery cell (20) provided with the pressure relief mechanism (213) reaches a threshold, to be actuated to relieve the internal pressure;
a thermal management component (13) configured to accommodate a fluid to adjust the temperature of the plurality of battery cells (20); and
a collection chamber (11b) configured to collect emissions from the battery cell (20) provided with the pressure relief mechanism (213) when the pressure relief mechanism (213) is actuated,
wherein the thermal management component (13) is configured to isolate the electrical chamber (11a) from the collection chamber (11b), and a support member (31) is provided in the collection chamber (11b), the support member (31) being configured to increase the compressive strength of the collection chamber (11b).

2. The case according to claim 1, **characterized in that** the support member (31) forms a channel configured for the passage of the emissions.

3. The case according to claim 2, **characterized in that** the support member (31) is provided with an orifice (310), the orifice (310) being configured to form the channel in the support member (31).

4. The case according to claim 3, **characterized in that** the channel is configured for the passage of gas in the emissions and the support member (31) is configured to block solids in the emissions.

5. The case according to claim 3 or 4, **characterized in that** the number of orifices (310) is greater than a preset threshold, such that more than a preset number of channels are formed in the support member (31).

6. The case according to any one of claims 3 to 5, **characterized in that** the orifices (310) in the support member (31) have a mesh number of 5 or more.

7. The case according to any one of claims 1 to 6, **characterized in that** a pressure relief region (130) is provided in the thermal management component (13), and the emissions is discharged through the pressure relief region (130) when the pressure relief mechanism (213) is actuated; and
the support member (31) is arranged corresponding to a non-pressure relief region of the thermal management component (13) to form the channel for the passage of the emissions.

8. The case according to claim 7, **characterized in that** the support member (31) is in contact with the non-pressure relief region of the thermal management component (13).

9. The case according to any one of claims 1 to 6, **characterized in that** a pressure relief region (130) is provided in the thermal management component (13), and the emissions is discharged through the pressure relief region (130) when the pressure relief mechanism (213) is actuated; and
the support member (31) is provided with a first orifice (311), the first orifice (311) being arranged corresponding to the pressure relief region (130) to form the channel in the support member (31) for the passage of the emissions.

10. The case according to claim 9, **characterized in that** the first orifice (311) is in communication with the pressure relief region of the thermal management component (13).

11. The case according to claim 9 or 10, **characterized in that** the first orifice (311) has a cross-sectional area not less than the area of the pressure relief region (130).

12. The case according to any one of claims 1 to 11, **characterized by** further comprising:
a protective member (115), wherein the protective member (115) is configured to protect the thermal management component (13), and the protective member (115) and the thermal management component (13) form the collection chamber (11b); and
the support member (31) is in contact with the thermal management component (13) and/or the protective member (115).

13. The case according to claim 12, **characterized in that** a connecting face of the support member (31) is in contact with the thermal management component (13) and/or the protective member (115), and a non-connecting face of the support member (31) is provided with a second orifice (312) to form a channel in the support member (31) for the passage of the emissions.

14. The case according to claim 12 or 13, **characterized in that** the protective member (115) and the support member (31) are of an integrated structure.

15. The case according to any one of claims 1 to 14, **characterized in that** the support member (31) is of a hollow structure.

16. The case according to claim 15, **characterized in that** the support member (31) is of a tubular structure.

17. The case according to claim 16, **characterized in that** the tubular structure has a cross-section in the shape of a hollow polygon, of which the number of sides is greater than or equal to 4.

18. The case according to claim 16 or 17, **characterized in that** a tube wall of the tubular structure has a thickness between 0.5 mm and 3 mm.

19. The case according to any one of claims 16 to 18, **characterized in that** the tubular structure is in the shape of a strip, a ring or a frame.

20. The case according to any one of claims 16 to 19, **characterized in that** there are a plurality of tubular structures, which are arranged apart from each other in the collection chamber (11b).

21. The case according to claim 20, **characterized in that** the plurality of tubular structures are symmetrically arranged in the collection chamber (11b).

22. The case according to any one of claims 16 to 19, **characterized in that** there are a plurality of tubular structures, which are stacked and connected to each other, wherein the plurality of tubular structures have a honeycomb-shaped cross-section.

23. The case according to claim 22, **characterized in that** connecting faces of two of the tubular structures connected to each other are provided with orifices corresponding to each other for forming a channel in the two tubular structures for the passage of the emissions.

24. The case according to any one of claims 1 to 23, **characterized in that** a surface of the support member (31) is provided with a temperature reducing material.

25. The case according to any one of claims 1 to 24, **characterized in that** the support member (31) is of a hollow structure in which a temperature reducing material is provided.

26. The case according to claim 24 or 25, **characterized in that** the temperature reducing material is a phase change material (PCM).

27. The case according to any one of claims 1 to 26, **characterized in that** the support member (31) is of a metal material.

28. A battery, **characterized by** comprising:
a plurality of battery cells (20), at least one battery cell (20) of the plurality of battery cells (20) comprising a pressure relief mechanism (213), and the pressure relief mechanism (213) being configured, when an internal pressure or temperature of the battery cell (20) provided with the pressure relief mechanism (213) reaches a threshold, to be actuated to relieve the internal pressure; and
a case according to any one of claims 1 to 27, the case being configured to accommodate the plurality of battery cells (20).

29. A power consumption device, **characterized by** comprising: a battery according to claim 28, the battery being configured to supply electric energy.

30. The power consumption device according to claim 29, **characterized in that** the power consumption device is a vehicle, a ship or a spacecraft.

31. A method for manufacturing a battery, **characterized by** comprising:
providing (301) a plurality of battery cells (20), at least one battery cell (20) of the plurality of battery cells (20) comprising a pressure relief mechanism (213), and the pressure relief mechanism (213) being configured, when an internal pressure or temperature of the battery cell (20) provided with the pressure relief mechanism (213) reaches a threshold, to be actuated to relieve the internal pressure;
providing (302) a case (11), the case (11) comprising:
an electrical chamber (11a) configured to accommodate the plurality of battery cells (20);
a thermal management component (13) configured to accommodate a fluid to adjust the temperature of the plurality of battery cells (20); and
a collection chamber (11b) configured to collect emissions from the battery cell (20) provided with the pressure relief mechanism (213) when the pressure relief mechanism (213) is actuated, wherein the thermal management component (13) is configured to isolate the electrical chamber (11a) from the collection chamber (11b), and a support member (31) is provided in the collection chamber (11b), the support member (31) being configured to increase the compressive strength of the collection chamber (11b); and
causing the plurality of battery cells (20) to be accommodated (303) in the electrical chamber (1 1a).

32. A device for manufacturing a battery, **characterized by** comprising:
a first provision module (410) configured to provide a plurality of battery cells (20), at least one battery cell (20) of the plurality of battery cells (20) comprising a pressure relief mechanism (213), and the pressure relief mechanism (213) being configured, when an internal pressure or temperature of the battery cell (20) provided with the pressure relief mechanism (213) reaches a threshold, to be actuated to relieve the internal pressure;
a second provision module (420) configured to provide a case (11), the case (11) comprising:
an electrical chamber (1 1a) configured to accommodate the plurality of battery cells (20);
a thermal management component (13) configured to accommodate a fluid to adjust the temperature of the plurality of battery cells (20); and
a collection chamber (11b) configured to collect emissions from the battery cell (20) provided with the pressure relief mechanism (213) when the pressure relief mechanism (213) is actuated,
wherein the thermal management component (13) is configured to isolate the electrical chamber (11a) from the collection chamber (11b), and a support member (31) is provided in the collection chamber (11b), the support member (31) being configured to increase the compressive strength of the collection chamber (11b); and
a mounting module (430) is configured to cause the plurality of battery cells (20) to be accommodated in the electrical chamber (11a).
